(19) Europäisches Patentamt / European Patent Office / Office européen des brevets

(11) **EP 2 096 561 B1**

(12) **EUROPEAN PATENT SPECIFICATION**

(45) Date of publication and mention
of the grant of the patent:
**06.06.2012 Bulletin 2012/23**

(51) Int Cl.:
***G06F 17/30*** *(2006.01)*

(21) Application number: **08152105.6**

(22) Date of filing: **28.02.2008**

(54) **Method for extracting relevant content from a markup language file, in particular from a HTML file**

Verfahren zur Extraktion relevanter Inhalte aus einer Markup-Language-Datei, insbesondere aus einer HTML-Datei

Procédé pour l'extraction d'un contenu pertinent à partir d'un fichier de langage de marquage, en particulier à partir d'un fichier HTML

(84) Designated Contracting States:
**AT BE BG CH CY CZ DE DK EE ES FI FR GB GR HR HU IE IS IT LI LT LU LV MC MT NL NO PL PT RO SE SI SK TR**

(43) Date of publication of application:
**02.09.2009 Bulletin 2009/36**

(73) Proprietor: **The European Union, represented by the European Commission**
**1049 Brussels (BE)**

(72) Inventor: **Van der Goot, Erik**
**21023, Besozzo (IT)**

(74) Representative: **Office Freylinger**
**P.O. Box 48**
**8001 Strassen (LU)**

(56) References cited:
**EP-A- 0 802 491**

- YANHONG ZHAI, BING LIU: "Web data extraction based on partial tree alignment" PROCEEDINGS OF THE 14TH INTERNATIONAL CONFERENCE ON WORLD WIDE WEB, [Online] 10 May 2005 (2005-05-10), pages 76-85, XP002489704 Chiba, Japan ISBN: 1-59593-046-9 Retrieved from the Internet: URL:http://portal.acm.org/citation.cfm?id= 1060761> [retrieved on 2008-07-24]
- DAVID BUTTLER, LING LIU, CALTON PU: "A Fully Automated Object Extraction System for the World Wide Web" PROCEEDINGS OF THE 2001 INTERNATIONAL CONFERENCE ON DISTRIBUTED COMPUTING SYSTEMS (ICDCS'01), [Online] May 2001 (2001-05), pages 361-370, XP002489705 Mesa, AZ, USA ISBN: 0-7695-1077-9 Retrieved from the Internet: URL: http://ieeexplore.ieee.org/xpls/abs_al l.jsp? arnumber=918966> [retrieved on 2008-07-24]

## Description

### Technical field

The present invention generally relates to automatic extraction of information content from markup language files, in particular from HTML files as widely available on the Internet.

### Technical Background

Markup languages combine content that has informational value, e.g. a primary text, with extra information. The extra information, including e.g. structure, layout, or other information, is commonly referred to as *"markup",* which is typically intermixed with the primary text. The most widespread markup language currently in use is HTML (HyperText Markup Language), which is used for visual rendering of web pages from the World Wide Web. Although the present invention is in principle not limited to HTML but generally applicable to other markup languages such as SGML, XML, XHTML, XSML, the following description focuses on HTML as a specific and widespread example of a markup language.

HTML describes how text and images should be rendered visible, usually by a software program called a "browser". The browser interprets a mixture of natural language text to be rendered and the markup instructions in a HTML file and creates the desired visual effect. The result should allow a human reader to easily distinguish between various elements to be displayed such as, for instance, main article text, sidebar, navigation elements, etc. The effect of the markup instructions is in general purely visual. Information about the role of a particular piece of text in the HTML file can hardly ever be determined from the markup instructions related to this piece of text. Even though some HTML instructions commonly referred to as *"tags"* have descriptive names (e.g. <title>, or <p> for paragraph), there are no generally adopted rules for the use of these tags. The desired visual effects can be achieved in many different ways. For this reason, the tags themselves could at best be used to derive some context information from a HTML file as suggested e.g. in European Patent EP 802 491, not however to extract the actual relevant content of the file. Hence, it appears that deriving relevant information from the combined text and markup instructions in a HTML data-stream is a non-trivial problem. As will be appreciated however, the ability of obtaining and having at one's disposal only the relevant content of markup language files would open up greatly beneficial opportunities in terms of reducing communication bandwidth requirements, reducing required storage space and processing resources as well as facilitating indexing and other tasks in the field of information retrieval (IR).

In order to reduce bandwidth requirements it would be possible to simply remove or compact the markup instructions from a file as suggested e.g. in European Patent EP 1 609 285 B1. In terms of extracting relevant content, simple removal of the HTML tags from the data stream does however not provide the desired result. A normal HTML page contains many content elements, e.g. pieces of text, that are not directly related to the relevant content, which is typically the main article text, or that do not otherwise represent relevant information content of interest to a user. Typical examples of such irrelevant elements are descriptions of hyperlinks pointing to various parts of the website or summaries of other web pages that can be found on the same or another website. Other typical examples are advertisements, navigation bars, copyright or legal notices, etc. As will be understood, the 'raw' text of these pages would contain many text passages that are not related to the main article text or that are otherwise not of interest to the user and could therefore be discarded in many applications (e.g. Media Monitoring or IR applications). An example of an IR system is described in European Patent EP 0 774 722 B1. Such IR systems could be significantly enhanced if there was an efficient and reliable method of providing them with relevant content only.

One way to attempt to derive the main article content could consist in producing a virtual rendering of the data, grouping the elements in a suitable data structure which captures the intended positional information of text on a screen and focusing on text that would render more or less in the area where a human reader would normally expect the most relevant text. The main drawback of this approach is that its complexity approaches that of a fully featured browser software.

### Prior Art

Surveys of recent research in the field of automated information extraction from HTML files can be found e.g. in the publications "A brief survey of web data extraction tools" by Laender, A. H., Ribeiro-Neto, B. A., da Silva, A. S., and Teixeira, J. S. in ACM SIGMOD Rec. 31, 2 pp. 84-93, Jun. 2002; and "A Survey of Web Information Extraction Systems." by Chia-Hui Chang, Mohammed Kayed, Moheb Ramzy Girgis, Khaled F. Shaalan in IEEE Transactions on Knowledge and Data Engineering, vol. 18, no. 10, pp. 1411-1428, Oct. 2006. Information extraction methods necessarily require an underlying method for extracting relevant content. As appears from the cited surveys, most of the known approaches rely on specialized programs, called wrappers, that identify data of interest and map such data to some suitable format. The main drawback of the wrapper approach is that normally a given wrapper is suitable only for a specific set of similarly formatted web pages e.g. from the same webservice. Recently emerging software programs for fully automatic wrapper generation may reduce the required amount of user effort and increase flexibility as to the web page formats that can be processed but such programs are highly complex and thus require considerable computing resources. Another drawback of most known approaches, including the wrapper approach, is that they require comparison between various similar web pages in order to determine relevant information content in one given HTML file. Obviously such approaches do not allow extracting relevant content from isolated HTML files, e.g. of single page web domains such as blogs.

Another approach that does not present the above drawbacks is described in the publication "Omini: A Fully Automated Object Extraction System for the World Wide Web" by David Buttler, Ling Liu, Calton Pu, Technical Report, Georgia Institute of Technology, College of Computing, Sept.2000. This approach does not rely on comparison between multiple similar HTML files and allows reliable extraction of objects using a subtree extraction algorithm combining three heuristics and an additional object separator extraction algorithm based on five further heuristics. Although this approach appears to be quite reliable, it also appears to come at the cost of requiring considerable computing resources.

Other prior art of interest is European Patent EP 861 565. This patent describes another interesting application in which great benefit could be taken of a method for extracting relevant content from HTML files, namely, accessing the World Wide Web via mobile communication devices. This patent also discloses one approach of extracting relevant content which is efficient but of limited applicability: determining content relevant for the user based on a search criterion to be provided by the user himself and returning only content that is related to this search criterion. As sole alternative that does not require a search criterion to be provided, this patent further suggest sending the entire content of a HTML file in a "cleaned-up" version, e.g. without any "markup" instructions. The latter approach has the drawback of not eliminating any irrelevant content. The former approach, although allowing efficient extraction of content that is relevant to users in a given situation, has the drawback that the users are required to have a minimum a priori knowledge of the content of the page that they want to search in order to formulate a search criterion. Moreover, the latter approach is not suitable for many other applications, such as media monitoring or information retrieval.

**Technical problem**

It is an object of the present invention to provide a computer implemented method for extracting relevant content from a markup language file, in particular from a HTML file, that is very efficient in terms of required computing resources while being reliable in terms of determining relevant content.

**General Description of the Invention**

In order to achieve the aforementioned object, a computer implemented method for extracting relevant content from a markup language file, in particular from a HTML file, according to claim 1 is proposed. This method comprises, in an initial phase:

- retrieving a markup language file, which contains data content, such as natural language

- text, and markup instructions, in particular HTML tags, from any kind of data storage;

- allocating a respective dimension to certain selected or all standard markup instructions of the markup language; and

- creating a data structure based on the retrieved markup language file.

Creating the data structure, e.g. a simple list or a full HTML parse tree, advantageously comprises:

- scanning the file for markup instructions and for content elements, where each content element has a size, e.g. expressible as the amount of letters of a given alphabet and is typically a fragment of the total data content;

- creating a dedicated item in the data structure at least for each content element or for both each content element and each instruction;

- determining a relative or absolute coordinate of each content element, in terms of a one-dimensional markup space and based on the dimension(s) allocated to markup instruction(s) scanned prior to the given content element, and associating the determined coordinate with the item created for the given content element.

The method further comprises:

- forming or establishing a grouping criterion for grouping content elements, which includes at least a condition that takes into account distance (in terms of the one-dimensional markup space) between adjacent content elements;

- defining content clusters using the data structure, wherein defining the content clusters comprises:

  - creating, on the basis of the established grouping criterion, groups of one or more content elements;

  - creating a separate cluster for each group of content elements that satisfies a predetermined clustering criterion;

  - associating information to each cluster, which information relates to the content element(s) in the given cluster and includes at least the size of each content element in the given cluster and the amount of content elements grouped in the given cluster;

- and calculating a relevancy, e.g. a numerical expression of relevancy using only information intrinsic to the given file, for each cluster.

Calculating the relevancy advantageously comprises:

- determining the result of a first function which increases with an increasing size of the content element(s) in the given cluster and decreases with an increasing amount of content elements in the given cluster; and

- determining at least one of:

  i. the result of a second function which increases with an increasing sum of the nth power of the size of each content element in the given cluster and decreases with an increasing amount of content elements in the given cluster; or

  ii. the result of a third function which decreases with increasing distance in terms of the one-dimensional markup space between the content elements in the given cluster;

- weighting the result of the first function at least with the result of the second function and/or the result of the third function.

In a final phase, the method further includes:

- selecting relevant clusters based on their relevancy;

- combining the content elements of the relevant clusters into a relevant content; and

- outputting the combined relevant content thus determined by selecting relevant clusters selecting relevant clusters based on their relevancy.

As will be appreciated, the proposed method for extracting relevant content relies on properties or characteristics that are intrinsic to the given markup language file itself. After creating candidate clusters according to criteria that may depend on the file itself, the method performs operations on certain properties or characteristics of the file and of the candidate clusters. These operations have comparatively low demands in terms of computing resources. For example, the first function will attribute more importance to candidate clusters that have a large average content element size. The second function will attribute additional importance to candidate clusters containing one or more content elements of comparatively large size. The third function in turn reduces the relative importance of any candidate clusters that contain, with respect to other clusters, many markup instructions and/or markup instructions of high dimension.
Using file-intrinsic properties and the operations thereon, the method can efficiently distinguish relevant content from any content that is of little if any interest.
Further preferred embodiments of the method are defined in dependent claims 2-22.
The present invention also relates to a computer program product comprising program code which, when loaded on a computer, is suitable for executing a method as set out above. The present invention further relates to a computer system comprising a processor or a programmable computing device programmed to perform the method as set out above. As will be appreciated, such system can be beneficially integrated e.g. into a media monitoring system, an information extraction system, a web server, a mobile communication server or into a mobile communication device for example.

**Brief Description of the Drawings**

Further details and advantages of the present invention will be apparent from the following detailed description of a not limiting, preferred embodiment with reference to the attached drawings, wherein:

FIG.1 is flowchart outlining the preferred embodiment of the computer implemented method according to the present invention;

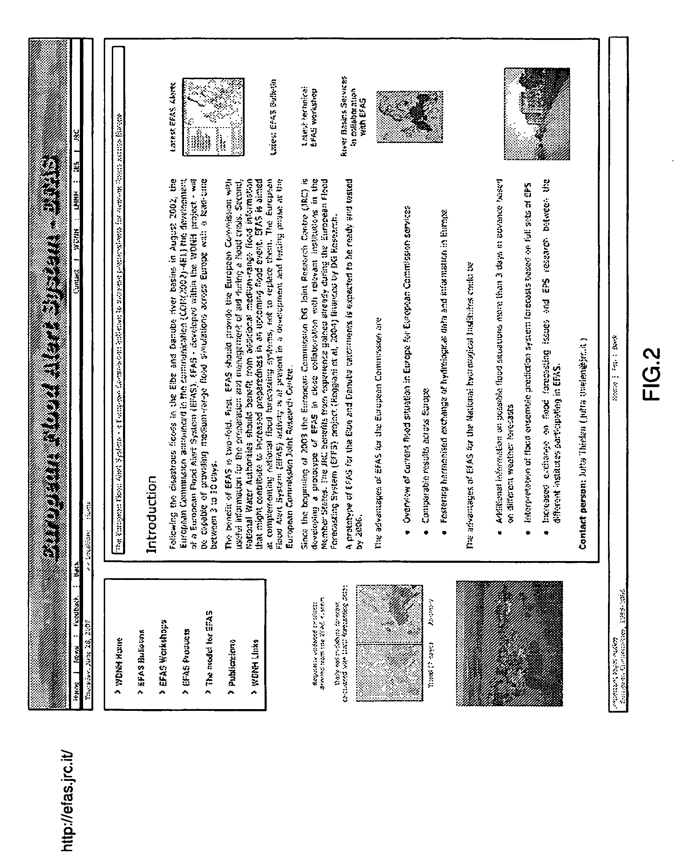

FIG.2 shows a visual rendering of the HTML code of FIGS.3A-E by a conventional web browser;

FIGS.3A-E reproduce the code of a sample HTML file with underlined content elements and contain several annotations for illustrating operation of the preferred embodiment.

**Description of Preferred Embodiments**

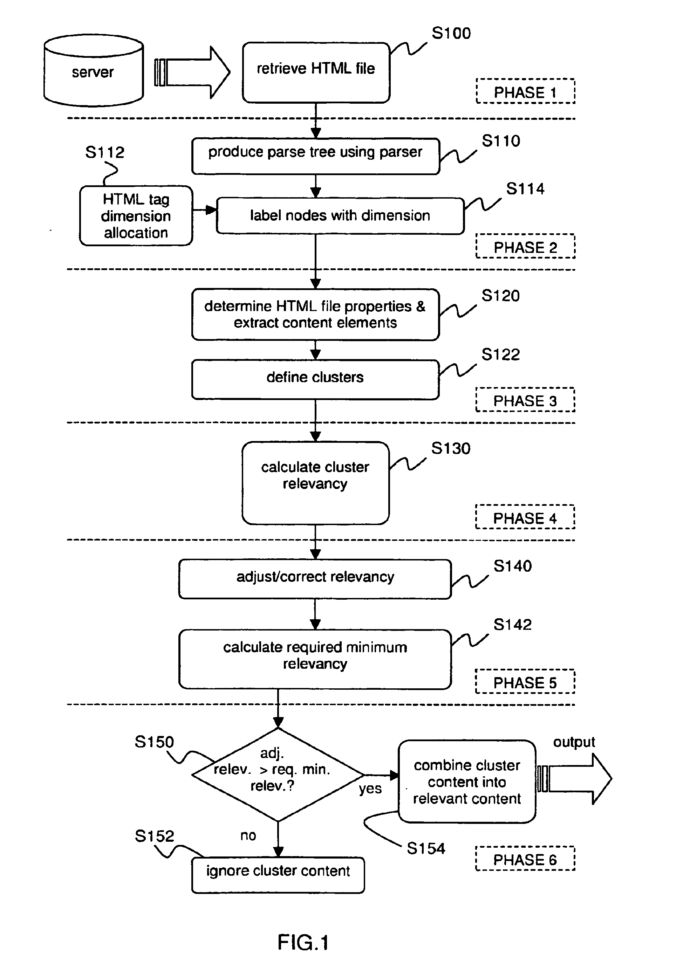

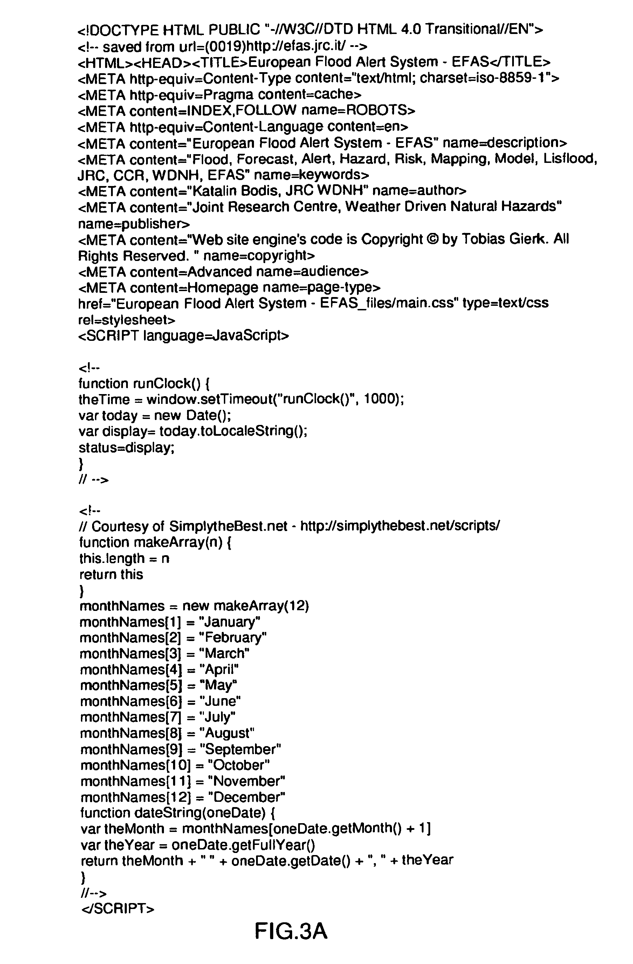

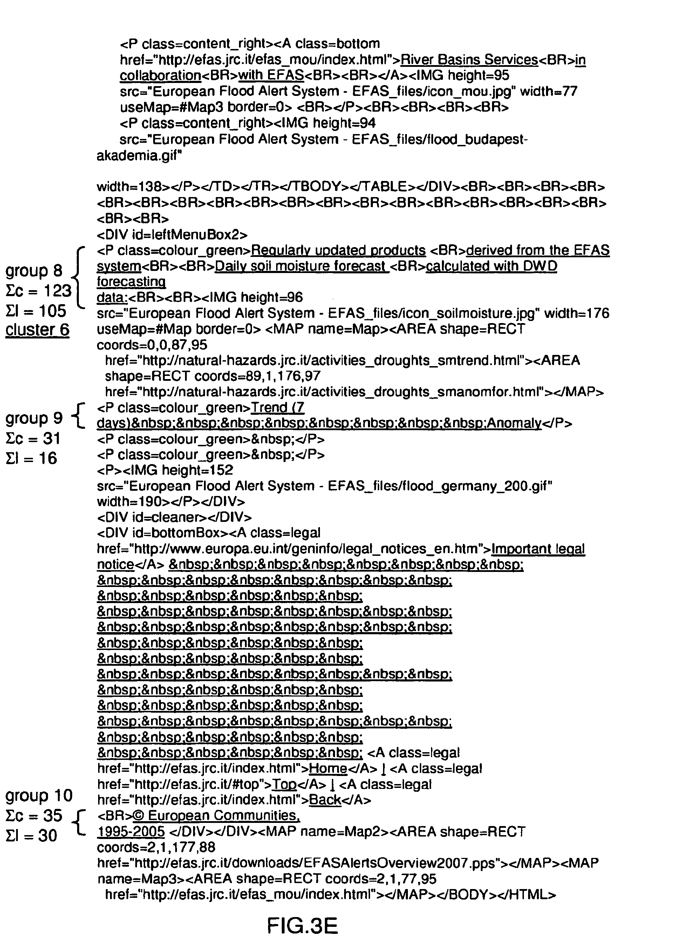

FIG.1 shows a flowchart illustrating the operation of a computerized method or program for automatic extraction of relevant content from a markup language file. An execution of this program will now be described in the order of the various consecutive phases PHASE1 to PHASE6 illustrated in FIG.1 with reference to the HTML file reproduced in FIGS.3A-E as a specific example of a markup language file.

PHASE 1: Data retrieval

Initially, the program retrieves a HTML file or data stream from a data storage which can be local or remote, e.g. from a server, usually via a network such as the Internet or e.g. a local area network LAN. Typically the server will be a webserver accepting HTTP requests and serving HTTP responses. The response includes a HTML data stream and possibly linked objects (images, etc.). The HTML data stream is stored as a file in a local memory in step S100, whereas linked objects such as graphic files are ignored. The HTML file contains data content, such as natural language text, intermixed with markup instructions. In FIGS.3A-E content elements have been underlined in order to facilitate their distinction with respect to HTML markup instructions.

PHASE 2: Creating data structure

In phase two, a data structure suitable for further processing is created based on the HTML file. In the preferred embodiment a *parse tree* is created as data structure. The concept of parse trees and program modules for creating such trees, in particular HTML parse trees are well known to the skilled person and therefore no detailed description thereof will be given here. The reader may refer e.g. to Principles of Compiler Design, by Alfred Aho and Jeffrey D. Ullman. Using an available or proprietary parser software module, the parse tree is created in step S110 by scanning the HTML file for markup instructions, i.e. HTML instructions and for content elements, i.e. separate elements of data content (see underlined content elements in FIGS.3A-E). The resulting parse tree will include either a root node or a branch node for each HTML instruction (in the following referred to as *tag*). For each content element, e.g. a natural text element or sequence encountered while parsing the HTML file, the parser creates a leaf node in the parse tree. Certain nodes of the tree thus contain or point to all those content elements of the HTML file that are not markup instructions or otherwise irrelevant data. The remaining nodes contain or point to the markup instructions, i.e. HTML tags. During or after creation of the parse tree, markup instructions or other data that is unnecessary to the subsequent extraction of relevant content, such as e.g. META tags and the related META content as shown in lines 4-28 of FIG.3A or SCRIPT data as shown in lines 29-66 of FIG.3A-B, may be discarded. Alternatively or in addition, any unnecessary data may simply be ignored by the parser, i.e. not included in the parse tree.

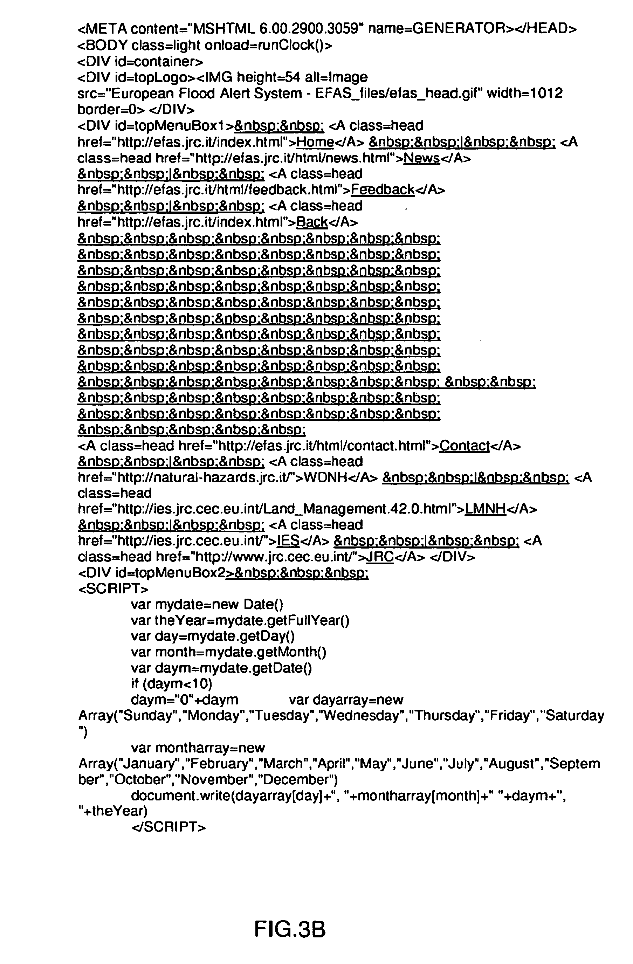

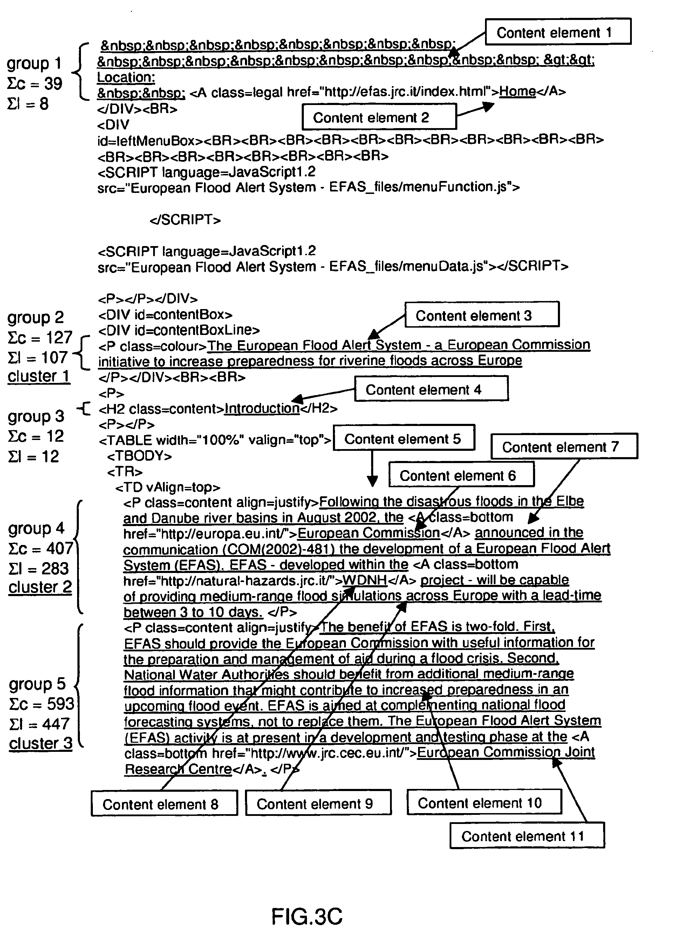

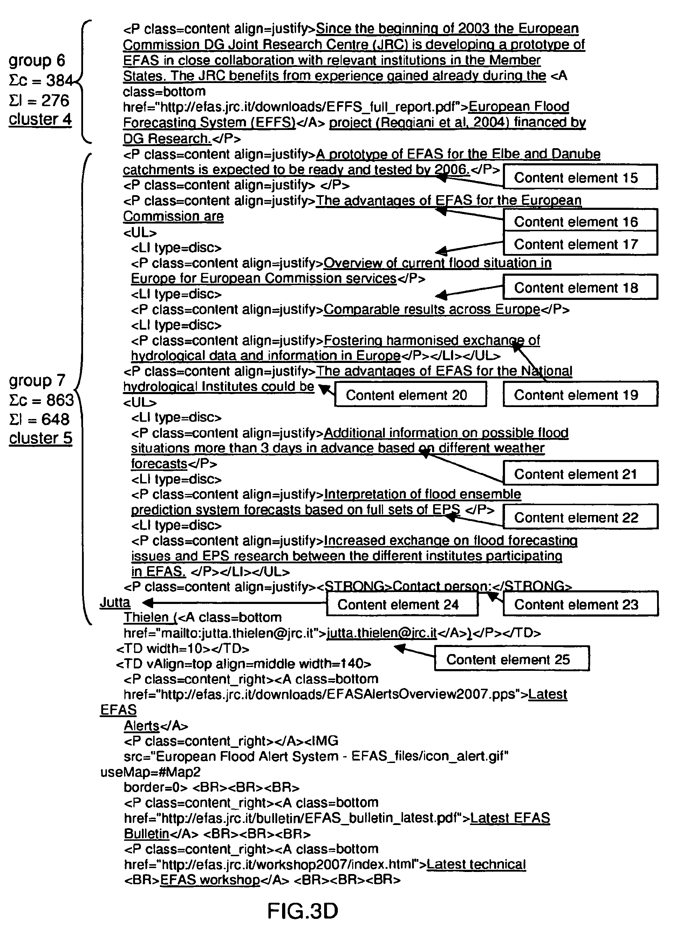

Table 1 shows an allocation table by means of which a value is allocated to certain types of HTML tags such as table, frameset, etc and certain formatting tags. The values allocated according to Table 1 express a hierarchy of tags in order to resolve any problems relating to improperly coded markup instructions, in particular problems related to missing "closing" tags, e.g. a missing end tag </a> relating to a previously "opened" start tag <a>. The hierarchy of values in Table 1 expresses which tags and related content elements can or cannot be contained or nested within other tags according to HTML specifications. For example, a <table> expression cannot be nested within a <a> expression. Using the hierarchy values of Table 1, any tags that have been improperly "left open" in the HTML file can be automatically closed on occurrence of a tag having a higher hierarchy value. More preferably, all previously opened tags having a lower hierarchy value than a newly encountered tag will be automatically closed (and any subsequent closing tags relating to lower hierarchy tags that occurred previously will be ignored). Hence, it will be understood that values according to Table 1 are allocated before creation of the parse tree and used when scanning the HTML file for markup instructions in order to create a proper parse tree. Other approaches for creating a proper parse tree representation of the HTML data stream are not excluded however, the hierarchy approach based on Table 1 being merely an improvement for very fast but proper creation of a parse tree data structure.

**Table 1**

| HTML tag | value | HTML tag | value | HTML tag | value |
|---|---|---|---|---|---|
| **top level** | | **frameset and frames** | | "span" | 200 |
| "html" | 1000 | "frameset" | 300 | "select" | 200 |
| "head" | 500 | "frame" | 290 | "optgroup" | 190 |
| "body" | 500 | "iframe" | 290 | "option" | 180 |
| **table elements** | | "noframes" | 300 | "dl" | 190 |
| "table" | 400 | "script" | 300 | "dt" | 180 |
| "colgroup" | 390 | "noscript" | 300 | "dd" | 180 |
| "col" | 390 | **embed and object** | | "ul" | 190 |
| "tbody" | 390 | "embed" | 300 | "menu" | 190 |
| "td" | 370 | "object" | 300 | "ol" | 190 |
| "tr" | 380 | "applet" | 300 | "li" | 180 |
| "th" | 370 | "form" | 250 | **others** | |
| "tfoot" | 380 | "fieldset" | 240 | "a" | 100 |
| "thead" | 380 | "div" | 220 | | |

Referring back to FIG.1, step S112 provides an allocation of a dimension to HTML tags.

Table 2 is an example allocation table of dimensions, preferably integer values, to be allocated to markup instructions i.e. HTML tags, which has proven suitable in practice. An empirically predetermined dimension is allocated to all standard HTML tags (e.g. according to HTML 4.01 "standard" published as a W3C Recommendation or according to ISO/IEC 15445:2000: "ISO HTML"), for example as indicated by Table 2. A default dimension, e.g. of value 0, is allocated to all (e.g. non-standard or user-defined) tags unknown to the routine that allocates coordinates (see below). These dimensions are values representing a heuristic expressing a concept of "distance measure" by which content elements are separated in a one-dimensional markup space (see below) due to tags associated to the content elements. To give an illustrative example of the purpose of the "tag-dimensions", two content elements separated by a <form> tag (dimension: 50) will be considered more "distant" from each other than two content elements separated by a <b> tag (dimension: 0), because with a separation by a <form> tag it is much less probable that the content elements belong to the same part of the content, e.g. to the same text passage, than with a separation by a <b> tag. In step S112, the respective dimension are associated the tags as shown in Table 2. As will be understood, the allocation of step S112 may of course be provided at initialisation, i.e. even before creation of the parse tree data structure.

**Table 2**

| HTML tag | dim. | HTML tag | dim. | HTML tag | dim. |
|---|---|---|---|---|---|
| "a" | 1 | "form" | 50 | "optgroup" | 10 |
| "abbr" | 10 | "frame" | 10 | "option" | 10 |
| "acronym" | 10 | "frameset" | 10 | "p" | 0 |
| "address" | 10 | "h1" | 0 | "param" | 10 |
| "applet" | 50 | "h2" | 0 | "pre" | 10 |
| "area" | 10 | "h3" | 0 | "q" | 10 |
| "b" | 0 | "h4" | 0 | "s" | 0 |

(continued)

| HTML tag | dim. | HTML tag | dim. | HTML tag | dim. |
|---|---|---|---|---|---|
| "base" | 10 | "h5" | 0 | "samp" | 10 |
| "basefont" | 10 | "h6" | 0 | "script" | 50 |
| "bdo" | 10 | "head" | 10 | "select" | 10 |
| "big" | 0 | "hr" | 20 | "small" | 0 |
| "blockquote" | 10 | "html" | 10 | "spacer" | 20 |
| "body" | 10 | "i" | 0 | "span" | 0 |
| "br" | 0 | "iframe" | 5 | "strike" | 0 |
| "button" | 10 | "img" | 0 | "strong" | 0 |
| "caption" | 10 | "input" | 50 | "style" | 10 |
| "center" | 0 | "ins" | 10 | "sub" | 0 |
| "cite" | 10 | "isindex" | 10 | "sup" | 0 |
| "code" | 10 | "kbd" | 10 | "table" | 20 |
| "col" | 10 | "label" | 10 | "tbody" | 10 |
| "colgroup" | 10 | "legend" | 10 | "td" | 5 |
| "dd" | 10 | "li" | 0 | "textarea" | 10 |
| "del" | 10 | "link" | 10 | "tfoot" | 10 |
| "dfn" | 10 | "map" | 10 | "th" | 10 |
| "dir" | 10 | "marquee" | 50 | "thead" | 10 |
| "div" | 20 | "menu" | 10 | "title" | 10 |
| "dl" | 10 | "meta" | 10 | "tr" | 10 |
| "dt" | 10 | "multicol" | 10 | "tt" | 0 |
| "em" | 0 | "noframes" | 10 | "u" | 0 |
| "embed" | 10 | "noscript" | 10 | "ul" | 0 |
| "fieldset" | 10 | "object" | 10 | "var" | 10 |
| "font" | 0 | "ol" | 5 | | |

One-dimensional (HTML) markup space

Generally speaking, step 114 serves to determine, for each content element identified by scanning the HTML file, a coordinate in terms of a one-dimensional markup space on the basis of the dimensions allocated to the tags. This coordinate is then associated to an item (e.g. a tree node) that represents the given content element in the data structure. The coordinate may be expressed as an absolute or a relative coordinate. An absolute coordinate may e.g. be equal to the sum of the dimensions of all tags scanned when starting from the beginning of the file up to the given content element. More preferably, however, when using a parse tree, coordinates can be determined by summing the tag dimensions of tag nodes encountered when "walking" the tree to the leaf node that represents the given content element. As will be appreciated however, instead of determining absolute coordinates for each content element, an equivalent approach consists in determining relative coordinates, i.e. only the relative distance between consecutive content elements (which amounts to the difference in absolute coordinates) and associating this "relative" distance with respect to its preceding content element to each scanned content element.

Using the allocation provided by step S112, in step S114 of PHASE 2 the program thus walks through the parse tree and labels the root node and branch nodes of the parse tree that represent a tag with the respective dimension allocated to the tag of the given node according to Table 2. The distance for a given content element is then determined as the sum of all dimensions allocated to the HTML tags (see Table 1) that are located in between the given content element and the preceding content element considered in the order of occurrence of the HTML file. As an illustrative example, reference is made to content element 5 of FIG.3C. As seen in Fig.3C the following tags are found between the preceding content element, i.e. content element 4, and content element 5: "<P>" [dimension: 0]; "</P>" [dimension: 0]; "<TABLE width="100%" valign="top">" [dimension: 20]; <TBODY> [dimension: 10]; <TR> [dimension: 10] and "<TD vAlign=top>" [dimension: 5]. The sum of the dimensions of these tags amounts to a distance value of 45 which is associated to content element 5 as corresponding distance relative to content element 4. It shall be noted that the distance value for the first content element found in the HTML data stream can be determined starting at the root node of the parse tree and calculating the sum of the dimensions of all tags on the path to the leaf node containing or pointing to the first content element. As shall be noted however, the distance associated to the first content element is not crucial for operation of the method and, in principle, could be arbitrary (corresponding to a mere change of coordinate reference frame). As will be understood the above procedure determines locations i.e. coordinates, either absolute or relative, of the content elements in a one-dimensional markup space, In similar manner, a distance or absolute coordinate is preferably associated to each node of the tree, i.e. also to the nodes representing a markup instruction. The present preferred embodiment uses relative coordinates (i.e. distances to the respectively preceding content element).

Step S114 thereby produces information that is used in the subsequent steps in order to discriminate relevant content.


PHASE 3: Defining content clusters

Generally speaking, PHASE 3 provides candidates for a subsequent choice of relevant content. In step S120, the proposed program determines the total length of the HTML file or data stream, e.g. in terms of total character length of the file. For the sample HTML file reproduced in FIGS.3A-E, the program determines a total length of 12'126 characters in step S120.

Furthermore, in step S120, the program determines a reference distance value. To this end it determines the different distance values associated to content elements that occur for the given HTML file. For each occurring distance value, the program then calculates the sum of the respective size of each content element to which the given distance is associated. In the present preferred embodiment, the size of a given content elements corresponds to the character count of a given content element. The resulting sum is allocated to the respective occurring distance value. As an illustrative example, Table 3 gives the result for the example HTML file of FIGS.3A-E. In other words, the program calculates a histogram with the distance values being the disjoint categories (or "bins") and the summed size (i.e. total character count) of content elements having this distance value being the number i.e. amount of observations (i.e. each character corresponds to an observation) that fall into the corresponding category:

**Table 3**

| occurring distance value | summed character count |
| --- | --- |
| 0 | 854 |
| 2 | 490 |
| 4 | 593 |
| 20 | 12 |
| 40 | 31 |
| 45 | 407 |
| 88 | 35 |
| 116 | 26 |
| 202 | 127 |
| 478 | 39 |

As seen in Table 3, for the HTML file of FIGS.3A-E, the distance value for which there is the highest amount of observations, i.e. the largest summed size of content elements having this associated distance, is distance value 0 with a total occurrence of 854 characters.

The distance value for which there is the largest summed size of the corresponding content elements, hereinafter the peak distance value, is used in step S120 as a basis to determine a reference distance value. This reference distance value, used subsequently to define candidate content clusters, is suitably set to be proportional to the peak distance value, the proportionality factor being determined empirically. In a simple but reliable embodiment, the reference distance value is simply set equal to the peak distance value. Accordingly, for the example of FIGS.3A-E, the reference distance value determined in step S120 is thus set to a value of 0. As will be understood, this value may typically be higher with other examples of HTML files. Other suitable ways of determining a reference distance value may be based on a histogram in which the amount of observations corresponds to the amount of content elements having the given associated distance, i.e. by determining the amount of occurrences of each occurring distance value and allocating its respective amount of occurrences to each given occurring distance value to create a histogram similar to that of Table 3. In another very simple approach that does not require histogram calculations, the reference distance value is set to an empirically determined fixed value, e.g. based on statistics of typical HTML files.

In step S122, the program creates groups of content elements based on a grouping criterion using, among others, the previously determined reference distance value.

Grouping criterion

The grouping criterion based on which content elements are grouped together is formed in step S122 or at another suitable time in the sequence of the method. For the purposes of the present "forming" a grouping criterion is to be understood as establishing conditions by means of program code, e.g. using relational operations, and includes the formulation of at least one such condition that must be satisfied for content elements to be grouped. In the present embodiments, the grouping criterion includes the following three conditions:

Condition 1 : taking into account distance between adjacent content elements

Each group comprises only consecutive content elements (in the order of appearance in the HTML file) that have an associated distance value, i.e. that have a distance with respect to the preceding content element in terms of said one-dimensional HTML space, less than or equal to the reference distance value determined in step S120. For illustration purposes, reference is made to FIGS.3A-E, in which the different content groups created by the program have been identified as "group 1" to "group 10". As an example based on FIG.3D, content elements 15-24 of group 7 are grouped in step S122 together since the markup instructions occurring in between content elements 15-24 (i.e. <P>, <LI>, <UL>, <STRONG>) all have an associated dimension of 0. Consequently the respective distance separating the pairs of content elements (15,16), (16, 17) (18, 19) ... (23, 24) is less than or equal to the reference distance value determined for the HTML file of FIGS.3A-E (i.e. 0). To give an opposite example referring to FIG.3C, content elements 1 and 2 of group 1 and those of group 2 are not grouped together into the same group because the distance associated to content element 3, i.e. the distance with respect to content element 1 (see below as to why content element 2 is not taken into account) is greater than the reference distance value, namely the distance associated to content element 3 with respect to content element 1 is 202, which is the sum of the dimensions of all tags scanned after the preceding content element 1 and prior to the given content element 3 according to the allocation of Table 2 (2 times dimension of <A> = 2, 5 times dimension of <DIV> =100 and 2 times <SCRIPT> = 100 sums up to 202, where <SCRIPT> opening and closing tags are treated in special manner as a single entity, with only one item in the data structure being created for the opening <SCRIPT> tag, the closing </SCRIPT> tag and for the actual script, because no further markup instructions inside the script are being considered). Similarly, content element 10 is not grouped together with content elements 5-9 because its distance amounts to 4 (4 times dimension of <A> = 4) with respect to content element 5 (see below as to why content elements 5-9 are "merged"). Condition 1, which is based on a reference distance value previously established, allows to group only those content elements that are "separated" by a distance that is relatively small in terms of the overall formatting of the HTML file (note that the reference distance value may be >0 in cases other than shown in FIGS.3A-E, e.g. in case a list of many and comparatively long consistently formatted text items is found in the HTML file).

Condition 2: taking into account a set of exceptions

Condition 2 takes into account a set of exceptions that allows defining certain types of markup instructions (tags) to be treated in special manner. In the present preferred embodiment the set of exceptions includes the set of "anchoring" tags <A> and </A> only, but further exceptions may be readily defined by the skilled person, especially in case of other types of markup language. In fact, the anchoring" tag <A> is often used in HTML to make a certain content element "clickable" i.e. refer to another location within the same file or to a different HTML file by means of a hyperlink. Using condition 1 alone, content elements that have an immediately preceding opening <A> tag and an immediately following closing </A> tag could be considered (depending on the reference distance value) to form separate groups of content elements, which is generally not desirable in case the content element to which the anchoring" tag <A> relates is truly embedded within other content elements, e.g. within a text passage (see e.g. content elements 6 & 8 in FIG.3C). Furthermore, content element that only have the purpose of forming clickable links without being integral part of a text passage might be considered as representing groups of content elements although they generally do not confer any informative content (see e.g. content elements underlined in FIG.3B). Therefore condition 2 requires that a content element is not retained for grouping, i.e. is simply discarded, if the <A> and </A> tags directly relating to, i.e. immediately preceding and following, are not immediately preceded and followed themselves by respective content elements. To give an example, content element 2 of FIG.3C is discarded and therefore does not form part of group 1, because its closing tag is not immediately followed by a content element (but by a </DIV> tag). Similarly, the preferred embodiment discards the underlined content elements between groups 7 and 8 on FIGS.3C-D for the same reason. Condition 2 further requires that, in case the set of <A> and </A> tags directly relating to the given content element are immediately preceded and followed by respective content elements, a content element is not retained for grouping if the content element respectively following does not have a size (see definition of "size" below) that exceeds a predefined minimum size. To give an example, content element 25 of FIG.3D is discarded and not grouped with content elements 15-24, because content element 25 is immediately followed by a very short content element ")" (which actually has a size of 0, see definition of size below). As will be appreciated, condition 2 allows to entirely discard any content that merely relates to "clickable links" as for example the corresponding content elements underlined in FIG.3B. On the other hand, based on condition 2, any content elements to which <A> and </A> tags directly relate will be merged with the preceding and subsequent content elements in case condition 2 is fulfilled, irrespective of the dimension allocated to the <A> and </A> tags. For this reason, content elements 5-9 of FIG.3C for example will be merged into a single element and form group 4 irrespective of the dimension associated to the <A> and </A> tags occurring e.g. between content elements 5 and 6. Condition 2 thus serves to incorporate content elements that represent "clickable" informative content that is "truly" embedded within other informative content and to eliminate any "clickable" content elements that represent less useful or irrelevant information (such as navigation sidebars).

Condition 3: taking into account parse tree structure

Condition 3 is based on a predefined set of top level structural markup instructions which are defined by the program, e.g. at initialisation. In the present embodiment the set of top level structural markup instructions is determined to comprise the following HTML tags:

- "html"

- "table"

- "tbody"

- "div"

- "form"

During creation of the parse tree in PHASE 2, the program indexes each root or branch node of the parse tree that was created for and thus represents one of the above top level structural markup instructions with a unique structural index (e.g. a positive integer). The leaf nodes are also indexed with the structural index of the nearest parent node. Condition 3, which takes into account the parse tree structure, is that adjacent i.e. consecutive content elements are grouped into the same group only if the nearest parent node, which represents a top level structural markup instruction, of the leaf node for the preceding content element has the same structural index as the nearest parent node, which represents a top level structural markup instruction, of the leaf node for the given content element. In other words, when two leaf nodes representing consecutive content elements depend on different (i.e. not the same) structural markup instruction nodes, they do not belong to the same group. In order to facilitate verification of condition 3, each node depending on the same structural markup instruction node may be labelled with the structural index of this same structural markup instruction node. To give an example, group 4 has a different structural index, namely that associated to the <TBODY> tag in line 135 of FIG.3C than group 3, namely the index associated to the preceding <DIV> tag. Thus even if the sum of the dimensions allocated to the tags scanned between content element 4 and content element 5 of FIG. 3C, theses elements would not be grouped by virtue of a differing structural index. Condition 3 serves to reflect the assumption that content elements which are "separated" by specific markup instructions termed top level structural markup instructions are generally not closely related in terms of their informative content.

Clustering criterion: taking into account the size of content element groups

On the basis of the groups of content elements determined previously on the basis of the grouping criterion, e.g. "group 1" to "group 10" in FIGS.3A-E, the program identifies and creates candidate content clusters, with respect to which further operations are carried out in order to identify and extract relevant content, e.g. the relevant text. In the proposed preferred method, the definition of content clusters is carried out in straightforward manner by eliminating all those groups of content elements that have a size that is less then a given predefined lower limit. In other words, the clustering criterion comprises the condition, that a respective separate candidate cluster is created only for each group of content elements that has a size exceeding a predefined minimum clustering size.

Content element / group size: For the purposes of the present, the size of a content element or of a group of content elements corresponds to the total amount (i.e. a positive integer) of literal characters and character codes (such as markup character references) in the given content element or the given group and represent letters (e.g. basic written symbols representing a phoneme of a spoken language) of a predetermined alphabet, e.g. the Latin alphabet (as in the example of FIGS.3A-E) or any other alphabet, including logographic and syllabic scripts, according to the HTML file to be processed. Other examples are the Arabic, Cyrillic, traditional Chinese or Japanese alphabets. It will be understood that the metric "size" according to the preferred embodiment differs from the amount of literal or coded characters as such, since any non-letter characters, for example formatting characters, such as e.g. the bracket (")") following content element 25 in FIG.3D, special character codes, such as blank spaces ( ), numbers, etc. are not taken into account as representative of the content element size / group size. As will be appreciated, this definition of size in connection with other criteria (e.g. condition 2 above) allows eliminating irrelevant content (e.g. the underlined content elements of FIG.3B).

As an example, the total amount of literal/coded characters for each group of content elements is indicated in FIGS.3A-E as "Σc" whereas the content element size is indicated as "Σl". A lower limit i.e. a predefined minimum clustering size that has proven successful in practice is e.g. 32 letters. Any group of content elements having a total size (i.e. sum of content element sizes) of less than, e.g. 32 letters is thus not retained as candidate content cluster according to the clustering criterion.

Consequently, with a predefined minimum clustering size of 32 in the example of FIGS.3A-E, the proposed method identifies 6 content clusters, indicated as "cluster 1" to "cluster 6". The following content element groups of FIGS. 3A-E therefore do not represent candidate clusters: "group 1", "group 3", "group 9" and "group 10". Note that the remaining content elements, e.g. as underlined in FIGS.3A-E, that do not form part of any groups, e.g. because they have been discarded as not satisfying condition 2 of the grouping criterion, do not form part of any cluster either and are thus rejected as irrelevant. It may also be noted that the predefined minimum size used in condition 2 of the grouping criterion can be set to the same value as the minimum clustering size, as is the case in the proposed embodiment. Differing values for these respective minimum sizes are however not excluded.

PHASE 4: Calculating cluster properties and cluster relevancy

Step S130 of the method initially determines information relating to the content element(s) in each cluster, i.e. certain properties for each cluster. In particular, this information includes the amount of content elements grouped in the given cluster and the total size of the content elements in the given cluster (i.e. "Σl" for the example of FIGS.3A-E). In the present embodiment, this information further includes the sum of the square of the respective size of each content element in the given cluster and a factor expressed as a sum of the ratio of the respective distance values of the content elements to the reference distance value, with a constant, e.g. 1, being added to the latter sum.

An exemplary extract of program code (in "Java" programming language) calculates these properties as follows:

```
int 1 = alphaLen(s):
if (d>0) nElements++;
sumL = sumL+1;
sumL2 = sumL2+1*1;
sumElementWeight = sumElementWeight + d*1.0/dMax;
```

with nElement, sumL, and sumL2 being the variables for the amount of content elements in the cluster, the total size of the content elements in the cluster (i.e. "Σl" for the example of FIGS.3A-E), and the aforementioned sum of the squares of the respective sizes of the content elements; dMax being the variable for the reference distance value, d being the variable for the distance value and sumElementWeight being the variable for the weighting factor. As will be understood, for each given cluster (e.g. "cluster 1" to "cluster 6" in FIGS.3A-E), the above code routine is executed repetitively for each content element in the given cluster.

For illustration purposes, Table 4 indicates the aforementioned information (cluster properties) calculated for clusters 1 to 6 as shown in FIGS.3A-E:

**Table 4**

| Property: | nElements | sumL | sumL2 | sumElement Weight |
|---|---|---|---|---|
| Cluster 1 | 1 | 107 | 11449 | 1 |
| Cluster 2 | 1 | 283 | 80089 | 1 |
| Cluster 3 | 1 | 447 | 199809 | 1 |
| Cluster 4 | 1 | 276 | 76176 | 1 |
| Cluster 5 | 1 | 648 | 47738 | 1 |
| Cluster 6 | 1 | 105 | 2801 | 1 |

After determining the aforementioned properties, step 130 further determines the maximum average size per content element among all clusters (i.e. "max(sumL / nElements)") and the total size of all content elements found in all clusters (i.e. "Σ (sumL)"). These values will be used in subsequent processing as will become apparent below. In the example of FIGS.3A-E, the method determines the maximum average amount of characters per content element among all clusters as 648 letters/element (="max(sumL / nElements)") and the total size of all clusters as 1866 letters.

Following the initial calculation of the intrinsic cluster properties, step S130 of the method calculates an initial unadjusted relevancy (i.e. a numerical expression, e.g. a number of a certain precision) for each cluster using the predetermined properties. The unadjusted relevancy will be used subsequently, after adjustment or correction, to identify clusters that contain relevant content.

An exemplary extract of program code (in "Java" programming language) calculates the unadjusted relevancy as follows:

```
public void calculateMagic(double max_avg)
{
double x= Math.sqrt(sumL2*1.0) ;
magic =
x/nElements*(sumL/(nElements*max_avg))/SumElementweight
}
```

using the aforementioned variables and the argument max_avg representing the maximum average amount of characters per content element among all clusters and providing the calculated relevancy as the variable magic.

Mathematically, the calculation performed by the program can thus be expressed as:

$$m_c = \frac{\dfrac{\sum_{i=1}^{n} l_i}{n} \cdot \dfrac{\sqrt{\sum_{i=1}^{n} (l_i)^2}}{n} \cdot \dfrac{1}{1+\sum_{i=1}^{n} \dfrac{d_i}{d_{max}}}}{\max_{j=1}^{m} \left( \dfrac{\sum_{i=1}^{n} l_{j,i}}{n_j} \right)}$$

where $m_c$ (corresponding to the variable magic) denotes the relevancy for cluster c, $l_i$ represents the size of the ith content element in cluster c, n represents the amount of content elements in cluster c (corresponding to nElements), $d_i$ represents the distance value determined for the ith content element in the given cluster, $d_{max}$ represents said reference distance value and where:

$$\max_{j=1}^{m} \left( \frac{\sum_{i=1}^{n} l_{j,i}}{n_j} \right)$$

represents the maximum average size per content element among all clusters (corresponding to max_avg).

Accordingly, calculating the unadjusted relevancy comprises:

- determining the result of a first function:

$$f_1(l,n) = \frac{\sum_{i=1}^{n} l_i}{n}$$

which increases with an increasing size of the content element(s) in the given cluster and decreases with an increasing amount of content elements in the given cluster (other functions having a similar behavior are not excluded);

- determining the result of a second function:

$$f_2(l,n) = \frac{\sqrt{\sum_{i=1}^{n} (l_i)^2}}{n}$$

which increases with an increasing sum of the nth power of the size of each content element in the given cluster and decreases with an increasing amount of content elements in the given cluster (other functions having a similar behavior are not excluded);

- determining the result of a third function:

$$f_3(d) = \frac{1}{1 + \sum_{i=1}^{n} \frac{d_i}{d_{max}}}$$

which decreases with increasing distance in terms of said one-dimensional markup space between the content elements in the given cluster (other functions having a similar behavior are not excluded);

- determining the maximum average size of content elements per cluster considered among all clusters:

$$\max_{j=1}^{m} \left( \frac{\sum_{i=1}^{n} l_{j,i}}{n_j} \right)$$

- and weighting the result of the first function by multiplication with the results of the second and third functions respectively and with the inverse of the maximum average size of content elements per cluster.

While a simplified approach may consist in weighting the result of the first function with the result of the second or third function only, best results have been obtained with the preferred calculation of the unadjusted relevance as set out above.

For illustration purposes, Table 5 indicates each unadjusted interim cluster relevancy $m_c$ as calculated for clusters 1 to 6 shown in FIGS.3A-E:

**Table 5**

|  | Cluster 1 | Cluster 2 | Cluster 3 | Cluster 4 | Cluster 5 | Cluster6 |
|---|---|---|---|---|---|---|
| **cluster relevancy** | 20,908 | 124,735 | 308,347 | 118,096 | 220,508 | 11,822 |

PHASE 5: Adjusting/correcting cluster relevancy and determining minimum required relevancy for each cluster

Generally speaking, step 140 corrects the "unadjusted" relevancy calculated for each cluster in view of the relative distance in terms of the one-dimensional markup space between each cluster and the cluster that so far has the largest "unadjusted" relevancy. This relative distance, more specifically the distance calculated by subtracting the distance (relative coordinate) of the first content element in the cluster having the largest unadjusted relevancy and the distance (relative coordinate) of the first content element in the given cluster, is used to determine a correction factor. To determine the correction factor for each cluster, the program identifies the cluster with the largest (unadjusted) cluster relevancy in step S140, which is in the example of FIGS.3A-E: "cluster 3". The program also identifies the relative coordinate (i.e. distance) associated to the first content element of the first cluster occurring in terms of the one dimensional markup space (i.e. "cluster 1 ") and the relative coordinate (i.e. distance) associated to the node in the parse tree created for the last markup instruction or content element in the HTML file. in order to determine a "span" i.e. a distance in terms of said one dimensional markup space within which the candidate clusters are located. Thus, the span is calculated by subtracting the latter two mentioned relative coordinates relating to the first candidate cluster and the end of the HTML file respectively. Alternatively, the span may be calculated e.g. as the difference between either of the first content element in the cluster having the largest unadjusted relevancy or the first content element in the first cluster occurring in the HTML file and either of the coordinate of the last markup instruction in the HTML file, or the first content element of the last cluster, or the last content element of the last cluster. The determined span is used to render the correction factor dimensionless as set out below.

As a further alternative, instead of referring the span to the first cluster occurring in the sequence of the HTML file (i.e. the cluster of which the first content element has the smallest coordinate), the span may be referred to the first cluster that has the same depth in the parse tree as the cluster having the largest unadjusted relevancy.

Step S140 then calculates for each cluster a correction factor for adjusting/correcting its unadjusted interim cluster relevancy based on the distance (in terms of the previously mentioned coordinates) between the cluster having the largest (unadjusted) relevancy and the given cluster under consideration and using the aforementioned span. Prior to calculating the correction factor, the program determines the "starting location", e.g. the coordinate of the cluster occurring first within the HTML file, and the "span" of the HTML file, i.e. the dimension of an interval that contains the candidate clusters. In order to obtain a correction factor of normalized to 1, and equal to 1 for the cluster having the largest (unadjusted) relevancy, the correction factor is conveniently calculated by means of a code routing expressing the following formula:

$$c = 1 - \frac{|d|}{s}$$

where c denotes the correction factor, |d| denotes the absolute value of the distance, in terms of the markup space, between the cluster having the largest unadjusted relevancy and the given cluster under consideration and s denotes the span calculated as set out above.

An exemplary routine in "Java" program code for calculating the correction factor as set out above is as follows:

```
public void correctMagic(int startC, int spanC)
    {
        double diff;
        if (startX > startC)
            diff = startX - startC;
        else
```

```
                diff = startC - startX;
        if (startC != startX)
                correction = (1.0 - (diff)*1.0/spanC);
        else
                correction = 1.0;
        }
```

where the arguments startC "starting location", i.e. the relative coordinate of the cluster having the largest unadjusted relevancy ("cluster 3" in the example of FIGS.3A-E), spanC represents the span and where the variable startX represents the relative coordinate (distance) associated to the first content element in the given cluster under consideration. Since the span (spanC or s above), irrespective of its actual calculation, is always greater than or equal to the possible distance between the given cluster and the cluster having the largest unadjusted relevancy, the correction factor (correction or c) will satisfy: $0 \le c \le 1$.

In the example of FIGS.3A-E, the "starting location" (of cluster 1) is at a distance of 680, the greatest coordinate (i.e. that of the node created for the last content element / HTML tag) at 1117 and the span thus has a value of 437. In a further preferred embodiment, the span may be reduced by the sum of the dimensions allocated to certain HTML tags that are purposely ignored (e.g. <div sty!e=""hidden"> ... </div>). The latter sum can be simply subtracted from the span in order to obtain a more accurate representation of the interval covered by HTML tags that are meaningful as regards content elements, i.e. HTML tags that are not conveniently ignored.

The final relevancy is then calculated in step S140 by multiplying the unadjusted relevancy of each cluster by the correction factor determined for the given cluster in question as set out above.

For illustration purposes, Table 6 indicates the correction factors and the adjusted minimum relevancy for clusters 1 to 6 shown in FIGS.3A-E:

**Table 6**

|  | Cluster 1 | Cluster 2 | Cluster 3 | Cluster 4 | Cluster 5 | Cluster 6 |
|---|---|---|---|---|---|---|
| **starting loc.** | 680 | 745 | 749 | 751 | 753 | 869 |
| **correction** | 0,8421 | 0,9908 | 1,0 | 0,9954 | 0,9908 | 0,7254 |
| **final cluster relevancy** | 17,668 | 123,594 | 308,347 | 117,555 | 218,490 | 8,575 |

As will be understood, applying the correction factor allows giving more importance to clusters that are "close" to the cluster that so far has the largest "unadjusted" relevancy in terms of the one-dimensional markup space than to more remote clusters. Although, step S140 leads to improved results, this step may be omitted, i.e. the unadjusted relevancy may be used as a final relevance in a simplified embodiment.

Determining a minimum required relevancy

In step S142, the program determines a minimum required relevancy for selecting relevant clusters among the candidate clusters based on their final relevancy. The minimum required relevancy is determined using the largest final relevancy, a weighted average relevancy and a content proportion factor.

In order to determine the minimum required relevancy, step S142 calculates a content proportion factor based on based on the total size of all grouped content elements among all candidate clusters and the total length of the markup language file. In the present embodiment, the latter total length corresponds to total amount of characters in the HTML file determined in step S120 (in terms of characters of any kind). Alternatively, the total size of the HTML file (including the size of non-grouped content elements and the size of groups that do have not been retained as candidate clusters) according the definition of size given above can be used. The content proportion factor (i.e. a number of a certain precision) is calculated using appropriate programming code expressing the following formula:

$$\frac{\sum_{k=1}^{p}(L_k)}{L_{tot}}$$

where $L_k$ represents the total size of all content elements that are grouped in cluster k, p represents the total amount of

clusters and $L_{tot}$ represents the total length (or total size) of the markup language file.

In step 142, the program further calculates the weighted average relevancy (i.e. a number of a certain precision) by means of program code expressing of the following formula:

$$\frac{\sum_{k=1}^{p}(m_k \cdot L_k)}{\sum_{k=1}^{p}(L_k)}$$

where $m_k$ denotes the relevancy for cluster k, $L_k$ represents the total size of all content elements grouped in cluster k and p represents the total amount of clusters.

Also in step 142, the method determines the largest final relevancy among all clusters, which in the example of FIGS.3A-E is the relevancy of "cluster 3" (i.e. 308,347).

Based on the aforementioned values determined in step 142, the method calculates the minimum required relevancy by means of program code expressing the following formula:

$$m_{req} = \left[ m_{max} - \left( \frac{\sum_{k=1}^{p}(m_k \cdot L_k)}{\sum_{k=1}^{p}(L_k)} \right) \right] \cdot \frac{\sum_{k=1}^{p}(L_k)}{L_{tot}}$$

where $m_{req}$ denotes the minimum required relevancy, $m_{max}$ denotes the largest final relevancy among all clusters, $m_k$ denotes the relevancy of cluster k, $L_k$ represents the total size of all content elements in cluster k, p represents the total amount of clusters and $L_{tot}$ represents the total length (or alternatively, the total size) of the markup language file.

An exemplary extract of Java programming code for calculating the minimum required relevancy according to the above formula is as follows:

```
double dReqMagic = (maxMagic-AvgMagic)*proportion
```

where maxMagic is the variable for the largest final (adjusted) relevancy among all clusters, AvgMagic is the variable for the weighted average relevancy based on the final (adjusted) relevancies calculated using the formula above and proportion is the variable for the ratio between the total size of the content elements found in all clusters and the total amount of characters of the HTML file (or the total size of the HTML file).

For illustration purposes, Table 7 indicates the values of the aforementioned variables for clusters 1 to 3 as shown in FIGS.3A-E:

**Table 7**

| variable: | value: |
|---|---|
| maxMagic | 308,347 |
| AvgMagic | 168,128 |
| size of "clustered" content | 1915 |
| "total HTML length" | 12126 |
| proportion | 0,154 |
| dReqMagic | 18,807 |

As will be appreciated, the minimum required relevancy determined as set out above can be used without any further computations to select clusters among the candidate clusters that are deemed to contain relevant information content by retaining all and only those content clusters their relevancy is greater than (or greater than or equal to) the minimum required relevancy. In the present preferred embodiment, information relating to the parse tree structure is further taken into account for selecting clusters among the candidate clusters, as set out below.

Information relating to the parse tree structure

In step S142 or earlier in the sequence of the method (e.g. when creating the parse tree), a structural depth (e.g. a positive integer) is determined for each content element or at least for each candidate cluster. This structural depth the depth corresponds to, in terms of the parse tree, the number (i.e. the amount) of parent nodes that represent markup instructions with an allocated respective dimension greater than a predetermined minimum dimension, which may be set to a value that eliminates taking into account nodes that represent pure formatting tags when determining the structural depth. Based on Table 2, the minimum dimension is in the preferred embodiment set to 0. In other words, when determining the structural depth of a leaf node representing a content element, only those nodes are counted that represent a HTML tag having an associated dimension > 0. In the example of FIGS.3A-E, this leads to the following examples of structural depth values: structural depth=2 for all content elements of "group 1", "group 3", "group 8", "group 9" and "group 10"; structural depth=3 for the content element of "group 2" and structural depth=6 for all content elements of "group 4", "group 5", "group 6" and "group 7". In step S142 (or earlier), the structural depth of the first content element in each candidate cluster is associated as one item of tree related information to the given cluster.

Step S142 further determines, with respect to the parse tree, a structural index for each cluster. The structural index of a given cluster corresponds to the structural index of the nearest parent node that represents a top level structural markup instruction, where the nearest parent node is conveniently the nearest parent node of the first content element in the given cluster. Herein, the structural index corresponds to that determined as set out above (see condition 3). In fact, by virtue of condition 3, all content elements in a given candidate cluster have the same structural index (since a new group is created in case there is a change of structural index).

Based upon the structural depth and the structural index values, step 142 further calculates a "structural factor" and a "depth factor" to be applied to the minimum required relevancy in order to determine the specific required relevancy for each cluster.

The depth factor is based on the difference between the structural depth of the cluster having the largest relevancy and the structural depth of the given cluster, and calculated by a formula expressible as:

$$f_d(c) = (d_{ref} - d_c)^2$$

where $f_d(c)$ denotes the depth factor for cluster c, $d_{ref}$ represents the depth of the cluster having the largest relevancy and $d_c$ represents the structural depth of cluster c.

The structural factor is based on the difference between the structural index of the cluster having the largest relevancy and the structural index of the given cluster, and calculated by a formula expressible as:

$$f_s(c) = (i_{ref} - i_c + 1)^2$$

where $f_s(c)$ denotes the structural factor for cluster c, $i_{ref}$ represents the structural index of the cluster having the largest relevancy and **$d_c$** represents the structural index of cluster c;

An exemplary program code routine for calculating the "structural factor" and a "depth factor", as set out above is as follows:

```
int depthFactor = (refDepth-c.depth) * (refDepth-c.depth);
if (depthFactor == 0) depthFactor = 1;
int structFactor = (refStruct-c.parentStruct+1)*
                           (refStruct-c.parentStruct+1);
if (structFactor == 0) structFactor = 1;
```

where refDepth and refstruct are variables for the structural depth and the structural index of the cluster having the largest adjusted relevancy, and where c. depth and c.parentstruct return respectively the structural depth and the structural index of the cluster under consideration

As will be understood, the depth factor allows correcting for a difference in structural depth between the cluster under consideration and the cluster having the largest adjusted relevancy. The structural factor allows to take into account differences in terms of top level structural tags on which the two compared clusters depend. A specific required relevancy for each cluster can then be calculated by multiplying the (general) minimum required relevancy with both the "structural factor" (i.e. structFactor or $f_s(c)$) and the "depth factor" (i.e. depthFactor or $f_d(c)$).

For illustration purposes, Table 8 indicates the values of the aforementioned variables and the respectively required specific minimum relevancy and repeats the adjusted relevancy for clusters 1 to 6 shown in FIGS.3A-E:

**Table 8**

|  | Cluster 1 | Cluster 2 | Cluster 3 | Cluster 4 | Cluster 5 | Cluster 6 |
|---|---|---|---|---|---|---|
| structFactor | 9 | 1 | 1 | 1 | 1 | 1 |
| depthFactor | 9 | 1 | 1 | 1 | 1 | 16 |
| adj. cluster relevancy | 17,668 | 123, 594 | 308,347 | 117,555 | 218,490 | 8,575 |
| specific req. min. relevancy | 1523,367 | 18,807 | 18,807 | 18,807 | 18,807 | 300,912 |

PHASE 6: extracting relevant content

In the final phase 6, step S150 selects relevant clusters among the candidate clusters based on the relevancies of the latter. To this effect, step S150 compares the adjusted cluster relevancy with the specific required minimum relevancy for each cluster (see Table 8). If the latter is greater than (or alternatively greater than or equal to) the former for a given cluster, all the content, e.g. natural language text, contained in this cluster is considered as relevant content. Accordingly, content contained in those clusters that do not satisfy the inequality:

final (adjusted) cluster relevancy > specific minimum relevancy is not considered relevant by virtue of step S152.

Instead of calculating a specific minimum required relevancy for each cluster expressly, the same effect can be obtained by incorporating the multiplication of the (general) required minimum relevancy by the depth factor and the structural factor into the required relational operation as follows:

$$m_c \geq m_{req} \cdot \left[ f_s(c) \cdot f_d(c) \right]$$

where $m_k$ denotes the relevancy for cluster c, $m_{req}$ denotes the (general) minimum required relevancy, $f_s(c)$ denotes the structural factor for cluster c and $f_d(c)$ denotes the depth factor for cluster c.

In step S154 the content of all clusters satisfying the mentioned inequality is combined into a single piece of relevant content and delivered as output of the proposed program by suitable program code routines.

Referring to the example of FIGS.3A-E, it will be appreciated that, due to the calculation of the relevancy, the result of phase 6 provides as output the combined content of "cluster 2", "cluster 3", "cluster 4" and cluster 5" whereas the content of clusters 1 and 6 is not considered as relevant content. Furthermore, the content of groups 2, 4 and 5 is not considered relevant due to an appropriate choice of candidate clusters.

In the example of FIGS.3A-E, the output of the preferred method for extracting relevant content described hereinabove is thus as follows:

"Following the disastrous floods in the Elbe and Danube river basins in August 2002, the European Commission announced in the communication (COM(2002)-481) the development of a European Flood Alert System (EFAS). EFAS - developed within the WDNH project - will be capable of providing medium-range flood simulations across Europe with a lead-time between 3 to 10 days. The benefit of EFAS is two-fold. First, EFAS should provide the European Commission with useful information for the preparation and management of aid during a flood crisis. Second, National Water Authorities should benefit from additional medium-range flood information that might contribute to increased preparedness in an upcoming flood event. EFAS is aimed at complementing national flood forecasting systems, not to replace them. The European Flood Alert System (EFAS) activity is at present in a development and testing phase at the Since the beginning of 2003 the European Commission DG Joint Research Centre (JRC) is developing a prototype of EFAS in close collaboration with relevant institutions in the Member States. The JRC benefits from experience gained already during the European Flood Forecasting System (EFFS) project (Reggiani et al, 2004) financed by DG Research. A prototype of EFAS for the Elbe and Danube catchments is expected to be ready and tested by 2006. The advantages of EFAS for the European Commission are Overview of current flood situation in Europe for European Commission services Comparable results across Europe Fostering harmonised exchange of hydrological data and information in Europe The advantages of EFAS for the National hydrological Institutes could be Additional information on possible flood situations more than 3 days in advance based on different weather forecasts Interpretation of flood ensemble prediction system forecasts based on full sets of EPS Increased exchange on flood forecasting issues and EPS research between the different institutes participating in EFAS. Contact person: Jutta Thielen ("

In conclusion, several advantages of the proposed method for extracting relevant content from a markup language file such as a HTML file should be summarized:

- the method is not based on similarities between different HTML files and thus allows extracting relevant content from isolated files;

- the method has relatively low demands in terms of processing time since it uses simple numerical computations based on the content of the HTML file;

- a high degree of accuracy and reliability has been achieved with tests on a large number of different HTML files;

- due to low demands in terms of processing resources, the proposed method is particularly suitable for implementation on mobile devices (mobile phones, PDAs, etc.);

- the method is robust with respect to improperly formatted HTML files and non-standard HTML tags, e.g. user-defined tags;

- although building a parse tree as a data structure is proposed in the preferred embodiment, those skilled in the art will appreciate, that the method can be implemented using a simple forward scanning routine for building a simple list of content elements (a parse tree is not mandatory)

## Claims

1. A computer implemented method for extracting relevant content from a markup language file, in particular from a HTML file, comprising:

   retrieving a markup language file (S100) from a local or remote data storage or server, in particular from a web server, said file containing data content, such as natural language text, and markup instructions, in particular HTML tags;
   providing an allocation (S112) that allocates a respective dimension to markup instructions of the markup language;
   creating a data structure (S110) based on the retrieved markup language file, wherein creating said data structure comprises:

   - scanning the markup language file for markup instructions and for content elements of said data content, each content element having a size;
   - creating a separate item in the data structure at least for each content element;
   - for each content element, determining a relative or absolute coordinate in a one-dimensional markup space based on the dimension(s) allocated to markup instruction(s) scanned prior to the given content element, and associating (S114) the determined relative or absolute coordinate with the item created for the given content element;

   forming a grouping criterion for grouping content elements, said grouping criterion including at least a condition taking into account distance between adjacent content elements in terms of said one-dimensional markup space;
   defining content clusters (S122) using said data structure, wherein defining said content clusters comprises:

   - creating groups of one or more content elements on the basis of said grouping criterion;
   - creating a separate cluster for each group of content elements that satisfies a clustering criterion;
   - associating to each cluster information relating to the content element(s) in the given cluster, said information including at least the size of each content element in the given cluster and the amount of content elements grouped in the given cluster;

calculating a relevancy (S130) for each cluster, wherein calculating said relevancy comprises:

• determining the result of a first function which increases with an increasing size of the content element (s) in the given cluster and decreases with an increasing amount of content elements in the given cluster; and
• determining at least one of:

- the result of a second function which increases with an increasing sum of the $n^{th}$ power of the size of each content element in the given cluster and decreases with an increasing amount of content elements in the given cluster; or
- the result of a third function which decreases with increasing distance in terms of said one-dimensional markup space between the content elements in the given cluster;

• weighting the result of said first function with at least one of the result of said second function and/or said third function;

selecting relevant clusters (S150) based on their relevancy;
combining the content elements (S154) of the relevant clusters into a relevant content;
outputting said relevant content.

2. The method according to claim 1, wherein calculating said relevancy (S130) comprises weighting the result of said first function with both the result of said second function and with the result of said third function.

3. The method according to claim 1 or 2, wherein forming said grouping criterion comprises:

- determining, in terms of said one-dimensional markup space, occurring distance values between adjacent content elements using said coordinates associated with said items;
- for each occurring distance value, calculating the sum of the size of each content element separated by this distance from an adjacent content element, preferably from a preceding content element, and allocating this sum to the given occurring distance value;
- determining a reference distance value (S120) based on that occurring distance value for which the allocated sum of content element sizes is the largest, preferably by setting said reference distance value to be equal to that occurring distance value for which the allocated sum of content element sizes is the largest;

and wherein said grouping criterion includes at least said condition, which takes into account distance, that adjacent content elements are grouped only if the distance between said adjacent content elements is smaller than or equal to said reference distance value.

4. The method according to claim 1 or 2, wherein forming said grouping criterion comprises:

- determining, in terms of said one-dimensional markup space, occurring distance values between adjacent content elements using said coordinates associated with said items;
- for each occurring distance value, determining the amount of occurrences of said distance value, and allocating this amount of occurrences to the given occurring distance value;
- determining a reference distance value (S120) based on that occurring distance value which has the highest amount of occurrences, preferably by setting said reference distance value to be equal to that occurring distance value which has the highest amount of occurrences;

and wherein said grouping criterion includes at least said condition, which takes into account distance, that adjacent content elements are grouped only if the distance between said adjacent content elements is smaller than or equal to said reference distance value.

5. The method according to claim 1 or 2, wherein forming said grouping criterion comprises:

- setting a fixed reference distance value;

and wherein said grouping criterion includes at least said condition, which takes into account distance, that adjacent content elements are grouped only if the distance between said adjacent content elements is smaller than or equal to said reference distance value.

**6.** The method according to any one of claims 1 to 5, wherein said grouping criterion includes a further condition, which takes into account a set of exceptions, that a content element is not retained for grouping if:

- a set of markup instructions directly relating to the given content element, said set having an opening and a closing instruction, belongs to a predefined set of exceptions and said opening instruction directly relating to the given content element is not immediately preceded by a content element and said content element is not immediately followed by a content element, and further preferably, in case the markup instructions of said set directly relating to the given content element are immediately preceded and followed by respective content elements, a content element is not retained for grouping if the content element respectively following said closing instruction does not have a size that exceeds a predefined minimum size.

**7.** The method according to any one of claims 1 to 6, wherein said first function determines the average size of the content elements in the given cluster and is expressible as:

$$f_1(l,n) = \frac{\sum_{i=1}^{n} l_i}{n}$$

where $l_i$ represents the size of the $i^{th}$ content element in the given cluster and n represents the amount of content elements in the given cluster.

**8.** The method according to claim 7, wherein calculating said relevancy (S130) further comprises dividing the result of said first function by the maximum average size of content elements per cluster considered among all clusters.

**9.** The method according to any one of claims 1 to 8, wherein said second function is expressible as:

$$f_2(l,n) = \frac{\sqrt{\sum_{i=1}^{n} (l_i)^2}}{n}$$

where $l_i$ represents the size of the $i^{th}$ content element in the given cluster and n represents the amount of content elements in the given cluster.

**10.** The method according to any one of claims 1 to 9, wherein said third function is expressible as:

$$f_3(d) = \frac{1}{1 + \sum_{i=1}^{n} \frac{d_i}{d_{max}}}$$

where $d_i$ represents a distance determined for the $i^{th}$ content element in the given cluster, n represents the amount of content elements in the given cluster and $d_{max}$ represents a reference distance value.

**11.** The method according to any one of claims 1 to 10, wherein calculating said relevancy (S130) comprises calculating an interim or final relevancy by a formula expressible as:

$$m_c = \frac{\dfrac{\sum\limits_{i=1}^{n} l_i}{n} \cdot \dfrac{\sqrt{\sum\limits_{i=1}^{n} (l_i)^2}}{n} \cdot \dfrac{1}{1+\sum\limits_{i=1}^{n} \dfrac{d_i}{d_{max}}}}{\max\limits_{j=1}^{m}\left(\dfrac{\sum\limits_{i=1}^{n} l_{j,i}}{n_j}\right)}$$

where $m_c$ denotes the relevancy for cluster c, $l_i$ represents the size of the $i^{th}$ content element in cluster c, n represents the amount of content elements in cluster c, $d_i$ represents a distance determined for the $i^{th}$ content element in the given cluster, $d_{max}$ represents a reference distance value and

$$\max\limits_{j=1}^{m}\left(\frac{\sum\limits_{i=1}^{n} l_{j,i}}{n_j}\right)$$

represents the maximum average size of content elements per cluster considered among all clusters.

**12.** The method according to any one of claims 1 to 11, wherein creating said data structure (S110) comprises creating a parse tree, in particular a HTML parse tree, further comprising:

- scanning the markup language file for markup instructions and for content elements of said data content, each content element having a size;
- creating a root node or a separate branch node in the parse tree for each scanned markup instruction;
- creating a separate leaf node in the parse tree for each content element;
- for each content element, determining a relative or absolute coordinate in a one-dimensional markup space based on the dimension(s) allocated to markup instruction(s) scanned prior to the given content element, and associating (S114) the determined relative or absolute coordinate, preferably the distance between the given content element and the preceding content element as a relative coordinate in said one-dimensional markup space, with the leaf node in the parse tree created for the given content element.

**13.** The method according to claim 12, further comprising:

determining a set of top level structural markup instructions;
indexing each root or branch node of said parse tree that represents a top level structural markup instruction with a unique structural index.

**14.** The method according to claim 13, and wherein said grouping criterion includes the further condition, which takes into account parse tree structure, that adjacent content elements are grouped only if, in terms of said parse tree, their respective nearest parent nodes that represent a top level structural markup instruction have the same structural index.

**15.** The method according to any one of the preceding claims, wherein selecting relevant clusters (S150) based on their relevancy further comprises:

- determining a minimum required relevancy (S142) and
- retaining clusters only (S152) if their relevancy is greater than or equal to said minimum required relevancy.

**16.** The method according to claim 13 or 14, wherein selecting relevant clusters (S150) based on their relevancy further comprises:

- for each cluster, determining a structural depth in said parse tree, said depth corresponding to, in terms of said parse tree, the amount of parent nodes of the given cluster, preferably of the first content element in the given cluster, that represent markup instructions with an allocated respective dimension greater than a predetermined minimum dimension;
- for each cluster, calculating a depth factor based on the difference between the structural depth of the cluster having the largest relevancy and the structural depth of the given cluster, preferably by a formula expressible as:

$$f_d(c) = (d_{ref} - d_c)^2$$

where $f_d(c)$ denotes the depth factor for cluster c, $d_{ref}$ represents the depth of the cluster having the largest relevancy and $d_c$ represents the depth of cluster c;
- for each cluster, determining a structural index in said parse tree, the structural index of a given cluster corresponding to the structural index of, in terms of said parse tree, the nearest parent node that represents a top level structural markup instruction of the given cluster, preferably of the first content element in the given cluster,
- for each cluster, calculating a structural factor based on the difference between the structural index of the cluster having the largest relevancy and the structural index of the given cluster, preferably by a formula expressible as:

$$f_s(c) = (i_{ref} - i_c + 1)^2$$

where $f_s(c)$ denotes the structural factor for cluster c, $i_{ref}$ represents the structural index of the cluster having the largest relevancy and $i_c$ represents the structural index of cluster c:
- determining a minimum required relevancy (S142) and
- retaining clusters only if their relevancy satisfies a relational operation based on said minimum required relevancy, on their depth factor and their structural factor, preferably according to a relational operation expressible as:

$$m_c \geq m_{req} \cdot \left[ f_s(c) \cdot f_d(c) \right]$$

where $m_c$ denotes the relevancy for cluster c, $m_{rsq}$ denotes the minimum required relevancy, $f_s(C)$ denotes the structural factor for cluster c and $f_d(c)$ denotes the depth factor for cluster c.

**17.** The method according to claim 12, 13, 14 or 16, wherein said markup language file is a HTML file and said set of top level structural markup instructions comprises the HTML tags: "html", "table", "tbody", "div", "form,".

**18.** The method according to claim 15, 16 or 17, wherein determining said minimum required relevancy (S142) comprises:

- calculating a content proportion factor based on the total size of all grouped content elements among all clusters and the total length or total size of the markup language file, said content proportion factor being preferably expressible as:

$$\frac{\sum_{k=1}^{p} (L_k)}{L_{tot}}$$

where $L_k$ represents the total size of all content elements that are grouped in cluster k, p represents the total amount of clusters and $L_{tot}$ represents the total size or total length of said markup language file;
- calculating a weighted average relevancy, preferably by a formula expressible as:

$$\frac{\sum_{k=1}^{p}(m_k \cdot L_k)}{\sum_{k=1}^{p}(L_k)}$$

where $m_k$ denotes the relevancy for cluster k, $L_k$ represents the total size of all content elements that are grouped in cluster k and p represents the total amount of clusters;
- determining the largest relevancy among the relevancies of all clusters;
- calculating said minimum required relevancy on the basis of said largest relevancy, said weighted average relevancy and said content proportion factor, preferably by a formula expressible as:

$$m_{req} = \left[ m_{max} - \left( \frac{\sum_{k=1}^{p}(m_k \cdot L_k)}{\sum_{k=1}^{p}(L_k)} \right) \right] \cdot \frac{\sum_{k=1}^{p}(L_k)}{L_{tot}}$$

where $m_{req}$ denotes the minimum required relevancy, $m_{max}$ denotes the largest relevancy among the relevancy of all clusters, $m_k$ denotes the relevancy for cluster k, $L_k$ represents the total size of all content elements that are grouped in cluster k, p represents the total amount of clusters and $L_{tot}$ represents the total length or total size of said markup language file.

**19.** The method according to any one of the preceding claims, wherein calculating said relevancy (S130) comprises:

• for each cluster, determining an unadjusted relevancy as being the result of weighting the result of said first function with at least the result of said second function and/or said third function;
• for each cluster, determining a correction factor based on the distance, in terms of said markup space, between the cluster having the largest unadjusted relevancy and the given cluster, preferably between the first content element in the cluster having the largest unadjusted relevancy and the first content element in the given cluster, said correction factor preferably using a non-dimensional value obtained by dividing the distance, in terms of said markup space, between the cluster having the largest unadjusted relevancy and the given cluster by a span, said span preferably being equal to a distance between either of:

- the first content element in the cluster having the largest unadjusted relevancy; or
- the first content element in first cluster occurring in terms of said markup space; and either of
- the coordinate of the last markup instruction in said markup language file in terms of said markup space; or
- the first content element of the last cluster occurring in terms of said markup space; or
- the last content element of the last cluster occurring in terms of said markup space;

wherein said correction factor is preferably expressible as:

$$c = 1 - \frac{|d|}{s}$$

where c denotes said correction factor, |d| denotes the absolute value of said distance, in terms of said markup space, between the cluster having the largest unadjusted relevancy and the given cluster and s denotes said span;
• determining said relevancy by adjusting the unadjusted relevancy (S140) of each cluster by means of the correction factor determined for the given cluster, preferably by multiplying the unadjusted relevancy of the given cluster by the correction factor determined for the given cluster.

20. The method according any one of the preceding claims, wherein determining a coordinate in a one-dimensional markup space based on the dimension(s) allocated to markup instruction(s) scanned prior to the given content element comprises:

- for each content element that is preceded by another content element in said markup language file, calculating the sum of the dimension(s) allocated to markup instruction(s) scanned after the preceding content element and prior to the given content element and associating said sum as a relative coordinate expressing distance to the preceding content element with the item created for the given content element; and
- for the first content element occurring in said markup language file:

  o calculating the sum of the dimension(s) allocated to markup instruction(s) scanned prior to the first content element and associating (S114) said sum as a coordinate expressing distance to the start of said file with the item created for the first content element; or
  o associating a predetermined coordinate to the item created for the first content element.

21. The method according any one of the preceding claims, wherein said clustering criterion comprises at least the condition, which takes into account the size of content element groups, that a respective separate cluster is created only for each group of content elements that has a size exceeding a predefined minimum clustering size.

22. The method according any one of the preceding claims, wherein said size of a content element or of a group of content elements is expressible as the total amount of literal characters and characters represented by character codes, such as markup character references, in the given content element or the given group, that represent letters in a predetermined alphabet.

23. A computer program product comprising program code which, when loaded on a computer, is suitable for executing a method according to any one of the preceding claims.

24. A computer system for extracting relevant content from a markup language file, in particular from a HTML file, said system comprising a processor or a programmable computing device programmed to:

retrieve a markup language file (S100) from a local or remote data storage or server, in particular from a web server, said file containing data content, such as natural language text, and markup instructions, in particular HTML tags;
provide an allocation (S112) that allocates a respective dimension to markup instructions of the markup language;
create a data structure (S110) based on the retrieved markup language file, wherein
creating said data structure comprises:

- scanning the markup language file for markup instructions and for content elements of said data content, each content element having a size;
- creating a separate item in the data structure at least for each content element;
- for each content element, determining a relative or absolute coordinate in a one-dimensional markup space based on the dimension(s) allocated to markup instruction(s) scanned prior to the given content element, and associating (S114) the determined relative or absolute coordinate with the item created for the given content element;

form a grouping criterion for grouping content elements, said grouping criterion including at least a condition taking into account distance between adjacent content elements in terms of said one-dimensional markup space;
define content clusters (S122) using said data structure, wherein defining said content clusters comprises:

- creating groups of one or more content elements on the basis of said grouping criterion;
- creating a separate cluster for each group of content elements that satisfies a clustering criterion;
- associating to each cluster information relating to the content element(s) in the given cluster, said information including at least the size of each content element in the given cluster and the amount of content elements grouped in the given cluster;

calculate a relevancy (S130) for each cluster, wherein calculating said relevancy comprises:

**25**

• determining the result of a first function which increases with an increasing size of the content element (s) in the given cluster and decreases with an increasing amount of content elements in the given cluster; and
• determining at least one of:

- the result of a second function which increases with an increasing sum of the $n^{th}$ power of the size of each content element in the given cluster and decreases with an increasing amount of content elements in the given cluster; or
- the result of a third function which decreases with increasing distance in terms of said one-dimensional markup space between the content elements in the given cluster;

• weighting the result of said first function with at least one of the result of said second function and/or said third function;

select relevant clusters (S150) based on their relevancy;
combine the content elements (S154) of the relevant clusters into a relevant content;
output said relevant content.

25. The computer system according to claim 24 wherein said processor or said programmable computing device is further programmed to perform the method of any one of claims 2 to 22.

26. A media monitoring system comprising the computer system according to claim 24 or 25.

27. An information extraction system comprising the computer system according to claim 24 or 25.

28. A web server comprising the computer system according to claim 24 or 25.

29. A mobile communication server comprising the computer system according to claim 24 or 25.

30. A mobile communication device comprising the computer system according to claim 24 or 25.

**Patentansprüche**

1. Computerimplementiertes Verfahren zum Extrahieren eines relevanten Inhalts aus einer Markup-Language-Datei, insbesondere aus einer HTML-Datei, umfassend:

Abrufen einer Markup-Language-Datei (S100) von einem lokalen oder entfernten Datenspeicher oder -server, insbesondere von einem Webserver, wobei die Datei einen Dateninhalt, beispielsweise Text in natürlicher Sprache, und Markup-Befehle, insbesondere HTML-Tags, enthält;
Bereitstellen einer Zuordnung (S112), die Markup-Befehlen der Markup Language eine jeweilige Dimension zuordnet;
Erzeugen einer Datenstruktur (S110) auf Basis der abgerufenen Markup-Language-Datei, wobei das Erzeugen der Datenstruktur Folgendes umfasst:

- Durchsuchen der Markup-Language-Datei auf Markup-Befehle und auf Inhaltselemente des Dateninhalts, wobei jedes Inhaltselement eine Größe hat;
- Erzeugen eines separaten Eintrags in der Datenstruktur zumindest für jedes Inhaltselement;
- für jedes Inhaltselement, Ermitteln einer relativen oder absoluten Koordinate in einem eindimensionalen Markup-Zwischenraum auf Basis der Dimension(en), die dem bzw. den Markup-Befehlen zugeordnet ist bzw. sind, der bzw. die vor dem bestimmten Inhaltselement durchsucht wurden, und Zuordnen (S114) der ermittelten relativen oder absoluten Koordinate zu dem für das bestimmte Inhaltselement erzeugten Eintrag;

Bilden eines Gruppierungskriteriums zum Gruppieren von Inhaltselementen, wobei das Gruppierungskriterium mindestens eine Bedingung umfasst,
die den Abstand zwischen benachbarten Inhaltselementen in Form des eindimensionalen Markup-Zwischenraums berücksichtigt;
Definieren von Inhaltsclustern (S122) unter Verwendung der Datenstruktur,
wobei das Definieren der Inhaltscluster Folgendes umfasst:

- Erzeugen von Gruppen eines oder mehrerer Inhaltselemente auf Basis des Gruppierungskriteriums;
- Erzeugen eines separaten Clusters für jede Gruppe von Inhaltselementen, die einem Clustereinteilungskriterium genügt;
- Zuordnen, zu jedem Cluster, einer Information, die sich auf das bzw. die Inhaltselemente in dem bestimmten Cluster bezieht, wobei die Information zumindest die Größe jedes Inhaltselements in dem bestimmten Cluster und die Menge der in dem bestimmten Cluster gruppierten Inhaltselemente umfasst;

Berechnen einer Relevanz (S130) für jedes Cluster, wobei das Berechnen der Relevanz Folgendes umfasst:

• Ermitteln des Ergebnisses einer ersten Funktion, welche mit einer zunehmenden Größe des bzw. der Inhaltselemente in dem bestimmten Cluster zunimmt und mit einer zunehmenden Menge von Inhaltselementen in dem bestimmten Cluster abnimmt; und
• Ermitteln von mindestens einem von:

- dem Ergebnis einer zweiten Funktion, welche mit einer zunehmenden Summe der n-ten Potenz der Größe jedes Inhaltselements in dem bestimmten Cluster zunimmt und mit einer zunehmenden Menge von Inhaltselementen in dem bestimmten Cluster abnimmt; oder
- dem Ergebnis einer dritten Funktion, welche mit zunehmendem Abstand in Form des eindimensionalen Markup-Zwischenraums zwischen den Inhaltselementen in dem bestimmten Cluster zunimmt;

• Gewichten des Ergebnisses der ersten Funktion mit mindestens einem von dem Ergebnis der zweiten Funktion und/oder der dritten Funktion;

Auswählen relevanter Cluster (S150) auf Basis von deren Relevanz;
Kombinieren der Inhaltselemente (S154) der relevanten Cluster zu einem relevanten Inhalt;
Ausgeben des relevanten Inhalts.

2. Verfahren nach Anspruch 1, wobei das Berechnen der Relevanz (S130) die Gewichtung des Ergebnisses der ersten Funktion sowohl mit dem Ergebnis der zweiten Funktion als auch mit dem Ergebnis der dritten Funktion umfasst.

3. Verfahren nach Anspruch 1 oder 2, wobei das Bilden des Gruppierungskriteriums Folgendes umfasst:

- Ermitteln, in Form des eindimensionalen Markup-Zwischenraums, von vorkommenden Abstandswerten zwischen benachbarten Inhaltselementen unter Verwendung der den Einträgen zugeordneten Koordinaten;
- für jeden vorkommenden Abstandswert, Berechnen der Summe der Größe jedes Inhaltselements, das um diesen Abstand von einem benachbarten Inhaltselement, vorzugsweise von einem vorangehenden Inhaltselement, getrennt ist, und Zuordnen dieser Summe zu dem bestimmten vorkommenden Abstandswert;
- Ermitteln eines Referenzabstandswerts (S120) auf Basis dieses vorkommenden Abstandswerts, für welchen die zugeordnete Summe von Inhaltselementgrößen die größte ist, vorzugsweise durch Einstellen des Referenzabstandswerts derart, dass er dem vorkommenden Abstandswert gleicht, für welchen die zugeordnete Summe von Inhaltselementgrößen die größte ist;

und wobei das Gruppierungskriterium zumindest die Bedingung, welche den Abstand berücksichtigt, umfasst, dass benachbarte Inhaltselemente nur gruppiert werden, wenn der Abstand zwischen den benachbarten Inhaltselementen kleiner als oder gleich wie der Referenzabstandswert ist.

4. Verfahren nach Anspruch 1 oder 2, wobei das Bilden des Gruppierungskriteriums Folgendes umfasst:

- Ermitteln, in Form des eindimensionalen Markup-Zwischenraums, von vorkommenden Abstandswerten zwischen benachbarten Inhaltselementen unter Verwendung der den Einträgen zugeordneten Koordinaten;
- für jeden vorkommenden Abstandswert, Ermitteln der Menge von Vorkommen des Abstandswerts und Zuordnen dieser Menge von Vorkommen zu dem bestimmten vorkommenden Abstandswert;
- Ermitteln eines Referenzabstandswerts (S120) auf Basis dieses vorkommenden Abstandswerts, welcher die höchste Menge von Vorkommen aufweist, vorzugsweise durch Einstellen des Referenzabstandswerts derart, dass er dem vorkommenden Abstandswert gleicht, welcher die höchste Menge von Vorkommen aufweist;

und wobei das Gruppierungskriterium zumindest die Bedingung, welche den Abstand berücksichtigt, umfasst, dass benachbarte Inhaltselemente nur gruppiert werden, wenn der Abstand zwischen den benachbarten Inhaltselementen kleiner als oder gleich wie der Referenzabstandswert ist.

5. Verfahren nach Anspruch 1 oder 2, wobei das Bilden des Gruppierungskriteriums Folgendes umfasst:

- Einstellen eines festen Referenzabstandswerts;

und wobei das Gruppierungskriterium zumindest die Bedingung, welche den Abstand berücksichtigt, umfasst, dass benachbarte Inhaltselemente nur gruppiert werden, wenn der Abstand zwischen den benachbarten Inhaltselementen kleiner als oder gleich wie der Referenzabstandswert ist.

6. Verfahren nach irgendeinem der Ansprüche 1 bis 5, wobei das Gruppierungskriterium eine weitere Bedingung, welche einen Satz von Ausnahmen berücksichtigt, umfasst, dass ein Inhaltselement nicht für die Gruppierung beibehalten wird, wenn:

- ein Satz von sich direkt auf das bestimmte Inhaltselement beziehenden Markup-Befehlen, wobei der Satz einen Öffnungs- und einen Schließbefehl aufweist, zu einem vorher definierten Satz von Ausnahmen gehört und dem sich direkt auf das bestimmte Inhaltselement beziehenden Öffnungsbefehl nicht unmittelbar ein Inhaltselement vorangeht und dem Inhaltselement nicht unmittelbar ein Inhaltselement folgt, und ferner vorzugsweise, falls den sich direkt auf das bestimmte Inhaltselement beziehenden Markup-Befehlen des Satzes jeweilige Inhaltselemente unmittelbar vorangehen und folgen, ein Inhaltselement nicht für die Gruppierung beibehalten wird, wenn das jeweils dem Schließbefehl folgende Inhaltselement nicht eine Größe aufweist, die eine vorher definierte Minimalgröße überschreitet.

7. Verfahren nach irgendeinem der Ansprüche 1 bis 6, wobei die erste Funktion die Durchschnittsgröße der Inhaltselemente in dem bestimmten Cluster ermittelt und ausdrückbar ist als:

$$f_1(l,n) = \frac{\sum_{i=1}^{n} l_i}{n}$$

wobei $l_i$ die Größe des i-ten Inhaltselements in dem bestimmten Cluster repräsentiert und n die Menge der Inhaltselemente in dem bestimmten Cluster repräsentiert.

8. Verfahren nach Anspruch 7, wobei das Berechnen der Relevanz (S130) ferner das Dividieren des Ergebnisses der ersten Funktion durch die maximale Durchschnittsgröße von Inhaltselementen für jedes unter allen Clustern in Betracht gezogene Cluster umfasst.

9. Verfahren nach irgendeinem der Ansprüche 1 bis 8, wobei die zweite Funktion ausdrückbar ist als:

$$f_2(l,n) = \frac{\sqrt{\sum_{i=1}^{n} (l_i)^2}}{n}$$

wobei $l_i$ die Größe des i-ten Inhaltselements in dem bestimmten Cluster repräsentiert und n die Menge der Inhaltselemente in dem bestimmten Cluster repräsentiert.

10. Verfahren nach irgendeinem der Ansprüche 1 bis 9, wobei die dritte Funktion ausdrückbar ist als:

$$f_3(d) = \frac{1}{1 + \sum_{i=1}^{n} \frac{d_i}{d_{max}}}$$

wobei $d_i$ einen für das i-te Inhaltselement in dem bestimmten Cluster ermittelten Abstand repräsentiert, n die Menge der Inhaltselemente in dem bestimmten Cluster repräsentiert und $d_{max}$ einen Referenzabstandswert repräsentiert.

**11.** Verfahren nach irgendeinem der Ansprüche 1 bis 10, wobei das Berechnen der Relevanz (S130) das Berechnen einer vorläufigen oder endgültigen Relevanz durch eine Formel umfasst, die ausdrückbar ist als:

$$m_c = \dfrac{\dfrac{\sum_{i=1}^{n} l_i}{n} \cdot \dfrac{\sqrt{\sum_{i=1}^{n} (l_i)^2}}{n} \cdot \dfrac{1}{1 + \sum_{i=1}^{n} \dfrac{d_i}{d_{max}}}}{\max_{j=1}^{m} \left( \dfrac{\sum_{i=1}^{n} l_{j,i}}{n_j} \right)}$$

wobei $m_c$ die Relevanz für das Cluster c bedeutet, $l_i$ die Größe des i-ten Inhaltselements in dem Cluster c repräsentiert, n die Menge der Inhaltselemente in dem Cluster c repräsentiert, $d_i$ einen für das i-te Inhaltselement in dem bestimmten Cluster ermittelten Abstand repräsentiert, $d_{max}$ einen Referenzabstandswert repräsentiert und

$$\max_{j=1}^{m} \left( \dfrac{\sum_{i=1}^{n} l_{j,i}}{n_j} \right)$$

die maximale Durchschnittsgröße von Inhaltselementen für jedes unter allen Clustern in Betracht gezogene Cluster repräsentiert.

**12.** Verfahren nach irgendeinem der Ansprüche 1 bis 11, wobei das Erzeugen der Datenstruktur (S110) das Erzeugen eines Syntaxbaums, insbesondere eines HTML-Syntaxbaums, umfasst, ferner umfassend:

- Durchsuchen der Markup-Language-Datei auf Markup-Befehle und auf Inhaltselemente des Dateninhalts, wobei jedes Inhaltselement eine Größe hat;
- Erzeugen eines Wurzelknotens oder eines separaten Verzweigungsknotens in dem Syntaxbaum für jeden durchsuchten Markup-Befehl;
- Erzeugen eines separaten Blattknotens in dem Syntaxbaum für jedes Inhaltselement;
- für jedes Inhaltselement, Ermitteln einer relativen oder absoluten Koordinate in einem eindimensionalen Markup-Zwischenraum auf Basis der Dimension(en), die dem bzw. den Markup-Befehlen zugeordnet ist bzw. sind, der bzw. die vor dem bestimmten Inhaltselement durchsucht wurden, und Zuordnen (S114) der ermittelten relativen oder absoluten Koordinate, vorzugsweise des Abstands zwischen dem bestimmten Inhaltselement und dem vorangehenden Inhaltselement als relative Koordinate in dem eindimensionalen Markup-Zwischenraum, zu dem für das bestimmte Inhaltselement erzeugten Blattknoten in dem Syntaxbaum.

**13.** Verfahren nach Anspruch 12, ferner umfassend:

Ermitteln eines Satzes von auf der höchsten Ebene befindlichen strukturellen Markup-Befehlen;
Indexieren jedes Wurzel- oder Verzweigungsknotens des Syntaxbaums, der einen auf der höchsten Ebene befindlichen strukturellen Markup-Befehl mit einem einmaligen Strukturindex repräsentiert.

**14.** Verfahren nach Anspruch 13, und wobei das Gruppenkriterium die weitere Bedingung, welche die Syntaxbaumstruktur berücksichtigt, umfasst, dass benachbarte Inhaltselemente nur gruppiert werden, wenn, in Form des Syntaxbaums, ihre jeweiligen nächsten Elternknoten, die einen auf der höchsten Ebene befindlichen strukturellen Markup-Befehl repräsentieren, den gleichen Strukturindex aufweisen.

**15.** Verfahren nach irgendeinem der vorangehenden Ansprüche, wobei das Auswählen relevanter Cluster (S150) auf Basis von deren Relevanz ferner Folgendes umfasst:

- Ermitteln einer minimalen erforderlichen Relevanz (S142) und
- Beibehalten von Clustern nur (S152), wenn deren Relevanz größer als oder gleich wie die minimale erforderliche Relevanz ist.

**16.** Verfahren nach Anspruch 13 oder 14, wobei das Auswählen relevanter Cluster (S150) auf Basis von deren Relevanz ferner Folgendes umfasst:

- für jedes Cluster, Ermitteln einer Strukturtiefe in dem Syntaxbaum, wobei die Tiefe, in Form des Syntaxbaums, der Menge derjenigen Elternknoten des bestimmten Clusters, vorzugsweise des ersten Inhaltselements in dem bestimmten Cluster, entspricht, die Markup-Befehle mit einer zugeordneten jeweiligen Dimension repräsentieren, die größer als eine vorgegebene minimale Dimension ist;
- für jedes Cluster, Berechnen eines Tiefenfaktors auf Basis der Differenz zwischen der Strukturtiefe des Clusters mit der größten Relevanz und der Strukturtiefe des bestimmten Clusters, vorzugsweise durch eine Formel, die ausdrückbar ist als:

$$f_d(c) = (d_{ref} - d_c)^2$$

wobei $f_d(c)$ den Tiefenfaktor für das Cluster c bedeutet, $d_{ref}$ die Tiefe des Clusters mit der größten Relevanz repräsentiert und $d_c$ die Tiefe des Clusters c repräsentiert;
- für jedes Cluster, Ermitteln eines Strukturindexes in dem Syntaxbaum, wobei der Strukturindex eines bestimmten Clusters dem Strukturindex, in Form des Syntaxbaums, des nächsten Elternknotens entspricht, der einen auf der höchsten Ebene befindlichen strukturellen Markup-Befehl des bestimmten Clusters, vorzugsweise des ersten Inhaltselements in dem bestimmten Cluster, repräsentiert;
- für jedes Cluster, Berechnen eines Strukturfaktors auf Basis der Differenz zwischen dem Strukturindex des Clusters mit der größten Relevanz und dem Strukturindex des bestimmten Clusters, vorzugsweise durch eine Formel, die ausdrückbar ist als:

$$f_s(c) = (i_{ref} - i_c + 1)^2$$

wobei $f_s(c)$ den Strukturfaktor für das Cluster c bedeutet, $i_{ref}$ den Strukturindex des Clusters mit der größten Relevanz repräsentiert und $i_c$ den Strukturindex des Clusters c repräsentiert;
- Ermitteln einer minimalen erforderlichen Relevanz (S142) und
- Beibehalten von Clustern nur, wenn deren Relevanz einer relationalen Operation auf Basis der minimalen erforderlichen Relevanz, von deren Tiefenfaktor und von deren Strukturfaktor genügt, vorzugsweise gemäß einer relationalen Operation, die ausdrückbar ist als:

$$m_c \geq m_{req} \cdot \left[ f_s(c) \cdot f_d(c) \right]$$

wobei $m_c$ die Relevanz für das Cluster c bedeutet, $m_{req}$ die minimale erforderliche Relevanz bedeutet, $f_s(c)$ den Strukturfaktor für das Cluster c bedeutet und $f_d(c)$ den Tiefenfaktor für das Cluster c bedeutet.

**17.** Verfahren nach Anspruch 12, 13, 14 oder 16, wobei die Markup-Language-Datei eine HTML-Datei ist und der Satz von auf der höchsten Ebene befindlichen Markup-Befehlen folgende HTML-Tags umfasst: "html", "table", "tbody", "div", "form".

**18.** Verfahren nach Anspruch 15, 16 oder 17, wobei das Bestimmen der minimalen erforderlichen Relevanz (S142) Folgendes umfasst:

- Berechnen eines Inhalts-Proportionalfaktors auf Basis der Gesamtgröße aller gruppierten Inhaltselemente unter allen Clustern und der Gesamtlänge oder Gesamtgröße der Markup-Language-Datei, wobei der Inhalts-Proportionalfaktor vorzugsweise ausdrückbar ist als:

$$\frac{\sum_{k=1}^{p} (L_k)}{L_{tot}}$$

wobei $L_k$ die Gesamtgröße aller Inhaltselemente, die in dem Cluster k gruppiert sind, repräsentiert, p die Gesamtmenge von Clustern repräsentiert und L$_{tot}$ die Gesamtgröße oder Gesamtlänge der Markup-Language-Datei repräsentiert;
- Berechnen einer gewichteten Durchschnittsrelevanz, vorzugsweise durch eine Formel, die ausdrückbar ist als:

$$\frac{\sum_{k=1}^{p}(m_k \cdot L_k)}{\sum_{k=1}^{p}(L_k)}$$

wobei m$_k$ die Relevanz für das Cluster k bedeutet, L$_k$ die Gesamtgröße aller Inhaltselemente, die in dem Cluster k gruppiert sind, repräsentiert und p die Gesamtmenge von Clustern repräsentiert:
- Ermitteln der größten Relevanz unter den Relevanzen aller Cluster;
- Berechnen der minimalen erforderlichen Relevanz auf Basis der größten Relevanz, der gewichteten Durchschnittsrelevanz und des Inhalts-Proportionalfaktors, vorzugsweise durch eine Formel, die ausdrückbar ist als:

$$m_{req} = \left[ m_{max} - \left( \frac{\sum_{k=1}^{p}(m_k \cdot L_k)}{\sum_{k=1}^{p}(L_k)} \right) \right] \cdot \frac{\sum_{k=1}^{p}(L_k)}{L_{tot}}$$

wobei m$_{req}$ die minimale erforderliche Relevanz bedeutet, m$_{max}$ die größte Relevanz unter der Relevanz aller Cluster bedeutet, m$_k$ die Relevanz für das Cluster k bedeutet, L$_k$ die Gesamtgröße aller Inhaltselemente, die in dem Cluster k gruppiert sind, repräsentiert, p die Gesamtmenge von Clustern repräsentiert und L$_{tot}$ die Gesamtgröße oder Gesamtlänge der Markup-Language-Datei repräsentiert.

19. Verfahren nach irgendeinem der vorangehenden Ansprüche, wobei das Berechnen der Relevanz (S130) Folgendes umfasst:

• für jedes Cluster, Ermitteln einer nicht eingestellten Relevanz als Ergebnis der Gewichtung des Ergebnisses der ersten Funktion mit zumindest dem Ergebnis der zweiten Funktion und/oder der dritten Funktion;
• für jedes Cluster, Ermitteln eines Korrekturfaktors auf Basis des Abstands, in Form des Markup-Zwischenraums, zwischen dem Cluster mit der größten nicht eingestellten Relevanz und dem bestimmten Cluster, vorzugsweise zwischen dem ersten Inhaltselement in dem Cluster mit der größten nicht eingestellten Relevanz und dem ersten Inhaltselement in dem bestimmten Cluster, wobei der Korrekturfaktor vorzugsweise einen dimensionslosen Wert verwendet, der durch Dividieren des Abstands, in Form des Markup-Zwischenraums, zwischen dem Cluster mit der größten nicht eingestellten Relevanz und dem bestimmten Cluster durch eine Spanne erhalten wird, wobei die Spanne vorzugsweise gleich ist einem Abstand zwischen einem von:

- dem ersten Inhaltselement in dem Cluster mit der größten nicht eingestellten Relevanz; oder
- dem ersten Inhaltselement in dem ersten Cluster, das in Form des Markup-Zwischenraums vorkommt; und einem von
- der Koordinate des letzten Markup-Befehls in der Markup-Language-Datei in Form des Markup-Zwischenraums; oder
- dem ersten Inhaltselement des letzten Clusters, das in Form des Markup-Zwischenraums vorkommt; oder
- dem letzten Inhaltselement des letzten Clusters, das in Form des Markup-Zwischenraums vorkommt;

wobei der Korrekturfaktor vorzugsweise ausdrückbar ist als:

$$c = 1 - \frac{|d|}{s}$$

wobei c den Korrekturfaktor bedeutet, |d| den Absolutwert des Abstands, in Form des Markup-Zwischenraums, zwischen dem Cluster mit der größten nicht eingestellten Relevanz und dem bestimmten Cluster bedeutet und s die Spanne bedeutet;
• Ermitteln der Relevanz durch Einstellen der nicht eingestellten Relevanz (S140) jedes Clusters mittels des für das bestimmte Cluster ermittelten Korrekturfaktors, vorzugsweise durch Multiplizieren der nicht eingestellten Relevanz des bestimmten Clusters mit dem für das bestimmte Cluster ermittelten Korrekturfaktor.

**20.** Verfahren nach irgendeinem der vorangehenden Ansprüche, wobei das Ermitteln einer Koordinate in einem eindimensionalen Markup-Zwischenraum auf Basis der Dimension(en), die dem bzw. den Markup-Befehlen zugeordnet ist bzw. sind, der bzw. die vor dem bestimmten Inhaltselement durchsucht wurden, Folgendes umfasst:

- für jedes Inhaltselement, dem ein anderes Inhaltselement in der Markup-Language-Datei vorangeht, Berechnen der Summe der Dimension(en), die dem bzw. den Markup-Befehlen zugeordnet ist bzw. sind, der bzw. die nach dem vorangehenden Inhaltselement und vor dem bestimmten Inhaltselement durchsucht wurden, und Zuordnen der Summe als eine relative Koordinate, die den Abstand zu dem vorangehenden Inhaltselement ausdrückt, zu dem für das bestimmte Inhaltselement erzeugten Eintrag; und
- für das erste Inhaltselement, das in der Markup-Language-Datei vorkommt:

o Berechnen der Summe der Dimension(en), die dem bzw. den Markup-Befehlen zugeordnet ist bzw. sind, der bzw. die vor dem ersten Inhaltselement durchsucht wurden, und Zuordnen (S114) der Summe als eine Koordinate, die den Abstand zu dem Anfang der Datei ausdrückt, zu dem für das erste Inhaltselement erzeugten Eintrag; oder
o Zuordnen einer vorgegebenen Koordinate zu dem für das erste Inhaltselement erzeugten Eintrag.

**21.** Verfahren nach irgendeinem der vorangehenden Ansprüche, wobei das Clustereinteilungskriterium zumindest die Bedingung, welche die Größe der Inhaltselementgruppen berücksichtigt, umfasst, dass ein jeweiliges separates Cluster nur für jede Gruppe von Inhaltselementen erzeugt wird, die eine Größe aufweist, die eine vorher definierte minimale Clustereinteilungsgröße überschreitet.

**22.** Verfahren nach irgendeinem der vorangehenden Ansprüche, wobei die Größe eines Inhaltselements oder einer Gruppe von Inhaltselementen ausdrückbar ist als Gesamtmenge derjenigen Literalzeichen und durch Zeichencodes repräsentierten Zeichen, beispielsweise Markup-Zeichenreferenzen, in dem bestimmten Inhaltselement oder der bestimmten Gruppe, welche Buchstaben in einem vorgegebenen Alphabet repräsentieren.

**23.** Computerprogrammprodukt umfassend einen Programmcode, welcher, wenn er auf einem Computer geladen ist, für die Ausführung eines Verfahrens nach irgendeinem der vorangehenden Ansprüche geeignet ist.

**24.** Computersystem zum Extrahieren eines relevanten Inhalts aus einer Markup-Language-Datei, insbesondere aus einer HTML-Datei, wobei das System einen Prozessor oder eine programmierbare Rechenvorrichtung umfasst, der bzw. die dafür programmiert ist:

eine Markup-Language-Datei (S100) von einem lokalen oder entfernten Datenspeicher oder -server, insbesondere von einem Webserver, abzurufen, wobei die Datei einen Dateninhalt, beispielsweise Text in natürlicher Sprache, und Markup-Befehle, insbesondere HTML-Tags, enthält;
eine Zuordnung (S112) bereitzustellen, die Markup-Befehlen der Markup Language eine jeweilige Dimension zuordnet;
eine Datenstruktur (S110) auf Basis der abgerufenen Markup-Language-Datei zu erzeugen, wobei das Erzeugen der Datenstruktur Folgendes umfasst:

- Durchsuchen der Markup-Language-Datei auf Markup-Befehle und auf Inhaltselemente des Dateninhalts, wobei jedes Inhaltselement eine Größe hat;
- Erzeugen eines separaten Eintrags in der Datenstruktur zumindest für jedes Inhaltselement;
- für jedes Inhaltselement, Ermitteln einer relativen oder absoluten Koordinate in einem eindimensionalen Markup-Zwischenraum auf Basis der Dimension(en), die dem bzw. den Markup-Befehlen zugeordnet ist bzw. sind, der bzw. die vor dem bestimmten Inhaltselement durchsucht wurden, und Zuordnen (S114) der ermittelten relativen oder absoluten Koordinate zu dem für das bestimmte Inhaltselement erzeugten Eintrag;

ein Gruppierungskriterium zum Gruppieren von Inhaltselementen zu bilden, wobei das Gruppierungskriterium mindestens eine Bedingung umfasst, die den Abstand zwischen benachbarten Inhaltselementen in Form des eindimensionalen Markup-Zwischenraums berücksichtigt;
Inhaltscluster (S122) unter Verwendung der Datenstruktur zu definieren, wobei das Definieren der Inhaltscluster Folgendes umfasst:

- Erzeugen von Gruppen eines oder mehrerer Inhaltselemente auf Basis des Gruppierungskriteriums;
- Erzeugen eines separaten Clusters für jede Gruppe von Inhaltselementen, die einem Clustereinteilungskriterium genügt;
- Zuordnen, zu jedem Cluster, einer Information, die sich auf das bzw. die Inhaltselemente in dem bestimmten Cluster bezieht, wobei die Information zumindest die Größe jedes Inhaltselements in dem bestimmten Cluster und die Menge der in dem bestimmten Cluster gruppierten Inhaltselemente umfasst;

eine Relevanz (S130) für jedes Cluster zu berechnen, wobei das Berechnen der Relevanz Folgendes umfasst:

• Ermitteln des Ergebnisses einer ersten Funktion, welche mit einer zunehmenden Größe des bzw. der Inhaltselemente in dem bestimmten Cluster zunimmt und mit einer zunehmenden Menge von Inhaltselementen in dem bestimmten Cluster abnimmt; und
• Ermitteln von mindestens einem von:

- dem Ergebnis einer zweiten Funktion, welche mit einer zunehmenden Summe der n-ten Potenz der Größe jedes Inhaltselements in dem bestimmten Cluster zunimmt und mit einer zunehmenden Menge von Inhaltselementen in dem bestimmten Cluster abnimmt; oder
- dem Ergebnis einer dritten Funktion, welche mit zunehmendem Abstand in Form des eindimensionalen Markup-Zwischenraums zwischen den Inhaltselementen in dem bestimmten Cluster abnimmt;

• Gewichten des Ergebnisses der ersten Funktion mit mindestens einem von dem Ergebnis der zweiten Funktion und/oder der dritten Funktion;

relevante Cluster (S150) auf Basis von deren Relevanz auszuwählen;
die Inhaltselemente (S154) der relevanten Cluster zu einem relevanten Inhalt zu kombinieren;
den relevanten Inhalt auszugeben.

**25.** Computersystem nach Anspruch 24, wobei der Prozessor oder die programmierbare Rechenvorrichtung ferner dafür programmiert ist, das Verfahren nach irgendeinem der Ansprüche 2 bis 22 durchzuführen.

**26.** Medienüberwachungssystem umfassend das Computersystem nach Anspruch 24 oder 25.

**27.** Informationsextraktionssystem umfassend das Computersystem nach Anspruch 24 oder 25.

**28.** Webserver umfassend das Computersystem nach Anspruch 24 oder 25.

**29.** Mobiler Kommunikationsserver umfassend das Computersystem nach Anspruch 24 oder 25.

**30.** Mobiles Kommunikationsgerät umfassend das Computersystem nach Anspruch 24 oder 25.

**Revendications**

**1.** Procédé mis en oeuvre par un ordinateur pour extraire un contenu pertinent d'un fichier de langage de balisage, en particulier d'un fichier HTML, comprenant :

la récupération d'un fichier de langage de balisage (S100) d'un stockage ou serveur de données local ou distant, en particulier d'un serveur Web,
ledit fichier contenant un contenu de données, tel qu'un texte en langage naturel, et des instructions de balisage, en particulier des balises HTML ;
la prévision d'une attribution (S112) qui attribue une dimension respective à des instructions de balisage du langage de balisage ;
la création d'une structure de données (S110) sur la base du fichier de langage de balisage récupéré, dans lequel la création de ladite structure de données comprend :

- le balayage du fichier de langage de balisage pour des instructions de balisage et pour des éléments de contenu dudit contenu de données, chaque élément de contenu ayant une taille ;
- la création d'un article séparé dans la structure de données au moins pour chaque élément de contenu ;

- pour chaque élément de contenu, la détermination d'une coordonnée relative ou absolue dans un espace de balisage unidimensionnel sur la base de la (des) dimension(s) attribuée(s) à la (aux) instruction(s) de balisage balayée(s) avant l'élément de contenu donné, et l'association (S114) de la coordonnée relative ou absolue déterminée avec l'article créé pour l'élément de contenu donné ;

la formation d'un critère de regroupement pour regrouper des éléments de contenu, ledit critère de regroupement incluant au moins une condition prenant en compte une distance entre éléments de contenu adjacents en termes dudit espace de balisage unidimensionnel ;
la définition de blocs de contenu (S122) en utilisant ladite structure de données, dans lequel la définition desdits blocs de contenu comprend :

- la création de groupes d'un ou plusieurs élément(s) de contenu sur la base dudit critère de regroupement ;
- la création d'un bloc séparé pour chaque groupe d'éléments de contenu qui satisfait à un critère de groupage ;
- l'association à chaque information de bloc se rapportant à (aux) élément(s) de contenu dans le bloc donné, ladite information incluant au moins la taille dé chaque élément de contenu dans le bloc donné et la quantité d'éléments de contenu groupés dans le bloc donné ;

le calcul d'une pertinence (S130) pour chaque bloc, dans lequel le calcul de ladite pertinence comprend :

· la détermination du résultat d'une première fonction qui augmente avec une taille croissante du (des) élément(s) de contenu dans le bloc donné et diminue avec une quantité croissante d'éléments de contenu dans le bloc donné ; et
· la détermination d'au moins un :

- du résultat d'une deuxième fonction qui augmente avec une somme croissante de la $n^{ème}$ puissance de la taille de chaque élément de contenu dans le bloc donné et diminue avec une quantité croissante d'éléments de contenu dans le bloc donné ; ou
- du résultat d'une troisième fonction qui diminue avec une distance croissante en termes dudit espace de balisage unidimensionnel entre les éléments de contenu dans le bloc donné ;

· la pondération du résultat de ladite première fonction avec au moins un du résultat de ladite deuxième fonction et/ou de ladite troisième fonction ;

la sélection de blocs pertinents (S150) sur la base de leur pertinence ;
la combinaison des éléments de contenu (S154) des blocs pertinents en un contenu pertinent ;
la délivrance en sortie dudit contenu pertinent.

2. Procédé selon la revendication 1, dans lequel le calcul de ladite pertinence (S130) comprend la pondération du résultat de ladite première fonction à la fois avec le résultat de ladite deuxième fonction et avec le résultat de ladite troisième fonction.

3. Procédé selon la revendication 1 ou 2, dans lequel la formation dudit critère de regroupement comprend :

- la détermination, en termes dudit espace de balisage unidimensionnel, de valeurs de distance apparaissant entre éléments de contenu adjacents en utilisant lesdites coordonnées associées avec lesdits articles ;
- pour chaque valeur de distance apparaissant, le calcul de la somme de la taille de chaque élément de contenu séparé de cette distance d'un élément de contenu adjacent, préférablement d'un élément de contenu précédent, et l'attribution de cette somme à la valeur de distance apparaissant donnée ;
- la détermination d'une valeur de distance de référence (S120) sur la base de la valeur de distance apparaissant pour laquelle la somme attribuée de tailles d'éléments de contenu est la plus grande, préférablement en fixant ladite valeur de distance de référence de façon à ce qu'elle soit égale à la valeur de distance apparaissant pour laquelle la somme attribuée de tailles d'éléments de contenu est la plus grande ;

et dans lequel ledit critère de regroupement inclut au moins ladite condition, qui prend en compte la distance, que des éléments de contenu adjacents ne sont regroupés que si la distance entre lesdits éléments de contenu adjacents est plus petite que ou égale à ladite valeur de distance de référence.

**4.** Procédé selon la revendication 1 ou 2, dans lequel la formation dudit critère de regroupement comprend :

- la détermination, en termes dudit espace de balisage unidimensionnel, de valeurs de distance apparaissant entre éléments de contenu adjacents en utilisant lesdites coordonnées associées avec lesdits articles ;
- pour chaque valeur de distance apparaissant, la détermination de la quantité d'apparitions de ladite valeur de distance, et l'attribution de cette quantité d'apparitions à la valeur de distance apparaissant donnée ;
- la détermination d'une valeur de distance de référence (S120) sur la base de la valeur de distance apparaissant qui a la plus grande quantité d'apparitions, préférablement en fixant ladite valeur de distance de référence de façon à ce qu'elle soit égale à la valeur de distance apparaissant qui a la plus grande quantité d'apparitions ;

et dans lequel ledit critère de regroupement inclut au moins ladite condition, qui prend en compte la distance, que des éléments de contenu adjacents ne sont regroupés que si la distance entre lesdits éléments de contenu adjacents est plus petite que ou égale à ladite valeur de distance de référence.

**5.** Procédé selon la revendication 1 ou 2, dans lequel la formation dudit critère de regroupement comprend :

- la fixation d'une valeur de distance de référence fixe ;

et dans lequel ledit critère de regroupement inclut au moins ladite condition, qui prend en compte la distance, que des éléments de contenu adjacents ne sont regroupés que si la distance entre lesdits éléments de contenu adjacents est plus petite que ou égale à ladite valeur de distance de référence.

**6.** Procédé selon l'une quelconque des revendications 1 à 5, dans lequel ledit critère de regroupement inclut une autre condition, qui prend en compte un ensemble d'exceptions, qu'un élément de contenu n'est pas retenu pour un regroupement si :

- un ensemble d'instructions de balisage se rapportant directement à l'élément de contenu donné, ledit ensemble ayant une instruction d'ouverture et une de clôture, appartient à un ensemble prédéfiini d'exceptions et ladite instruction d'ouverture se rapportant directement à l'élément de contenu donné n'est pas immédiatement précédée par un élément de contenu et ledit élément de contenu n'est pas immédiatement suivi par un élément de contenu, et en outre préférablement, dans le cas où les instructions de balisage dudit ensemble se rapportant directement à l'élément de contenu donné sont immédiatement précédées et suivies par des éléments de contenu respectifs, un élément de contenu n'est pas retenu pour un regroupement si l'élément de contenu suivant respectivement ladite instruction de clôture n'a pas une taille qui excède une taille minimum prédéfinie.

**7.** Procédé selon l'une quelconque des revendications 1 à 6, dans lequel ladite première fonction détermine la taille moyenne des éléments de contenu dans le bloc donné et est exprimable comme :

$$f_1(l,n) = \frac{\sum_{i=1}^{n} l_i}{n}$$

où $l_i$ représente la taille du $i^{ème}$ élément de contenu dans le bloc donné et n représente la quantité d'éléments de contenu dans le bloc donné.

**8.** Procédé selon la revendication 7, dans lequel le calcul de ladite pertinence (S130) comprend en outre la division du résultat de ladite première fonction par la taille moyenne maximum d'éléments de contenu par bloc considérée parmi tous les blocs.

**9.** Procédé selon l'une quelconque des revendications 1 à 8, dans lequel ladite deuxième fonction est exprimable comme :

$$f_2(l,n) = \frac{\sqrt{\sum_{i=1}^{n} (l_i)^2}}{n}$$

où $l_i$ représente la taille du $i^{ème}$ élément de contenu dans le bloc donné et n représente la quantité d'éléments de contenu dans le bloc donné.

10. Procédé selon l'une quelconque des revendications 1 à 9, dans lequel ladite troisième fonction est exprimable comme :

$$f_3(d) = \frac{1}{1 + \sum_{i=1}^{n} \frac{d_i}{d_{max}}}$$

où $d_l$ représente une distance déterminée pour le $i^{ème}$ élément de contenu dans le bloc donné, n représente la quantité d'éléments de contenu dans le bloc donné et $d_{max}$ représente une valeur de distance de référence.

11. Procédé selon l'une quelconque des revendications 1 à 10, dans lequel le calcul de ladite pertinence (S130) comprend le calcul d'une pertinence provisoire ou définitive par une formule exprimable comme :

$$m_c = \frac{\frac{\sum_{i=1}^{n} l_i}{n} \cdot \frac{\sqrt{\sum_{i=1}^{n} (l_i)^2}}{n} \cdot \frac{1}{1 + \sum_{i=1}^{n} \frac{d_i}{d_{max}}}}{\max_{j=1}^{m} \left( \frac{\sum_{i=1}^{n} l_{j,i}}{n_j} \right)}$$

où $m_c$ dénote la pertinence pour le bloc c, $l_i$ représente la taille du $i^{ème}$ élément de contenu dans le bloc c, n représente la quantité d'éléments de contenu dans le bloc c, $d_l$ représente une distance déterminée pour le $i^{ème}$ élément de contenu dans le bloc donné, $d_{max}$ représente une valeur de distance de référence et

$$\max_{j=1}^{m} \left( \frac{\sum_{i=1}^{n} l_{j,i}}{n_j} \right)$$

représente la taille moyenne maximum d'éléments de contenu par bloc considérée parmi tous les blocs.

12. Procédé selon l'une quelconque des revendications 1 à 11, dans lequel la création de ladite structure de données (S110) comprend la création d'un arbre syntaxique, en particulier un arbre syntaxique HTML, comprenant en outre :

- le balayage du fichier de langage de balisage pour des instructions de balisage et pour des éléments de contenu dudit contenu de données, chaque élément de contenu ayant une taille ;
- la création d'un noeud racine ou d'un noeud branche séparé dans l'arbre syntaxique pour chaque instruction de balisage balayée ;
- la création d'un noeud feuille séparé dans l'arbre syntaxique pour chaque élément de contenu ;
- pour chaque élément de contenu, la détermination d'une coordonnée relative ou absolue dans un espace de balisage unidimensionnel sur la base de la (des) dimension(s) attribuée(s) à la (aux) instruction(s) de balisage balayée(s) avant l'élément de contenu donné, et l'association (S114) de la coordonnée relative ou absolue déterminée, préférablement la distance entre l'élément de contenu donné et l'élément de contenu précédent comme une coordonnée relative dans ledit espace de balisage unidimensionnel, avec le noeud feuille dans l'arbre syntaxique créé pour l'élément de contenu donné.

13. Procédé selon la revendication 12, comprenant en outre :

la détermination d'un ensemble d'instructions de balisage structurelles de niveau supérieur ;
l'indexation de chaque noeud racine ou branche dudit arbre syntaxique qui représente une instruction de balisage structurelle de niveau supérieur avec un indice structurel unique.

14. Procédé selon la revendication 13, et dans lequel ledit critère de regroupement inclut l'autre condition, qui prend en compte une structure d'arbre syntaxique, que des éléments de contenu adjacents ne sont regroupés que si, en termes dudit arbre syntaxique, leurs noeuds parents les plus proches respectifs qui représentent une instruction de balisage structurelle de niveau supérieur ont le même indice structurel.

15. Procédé selon l'une quelconque des revendications précédentes, dans lequel la sélection de blocs pertinents (S150) sur la base de leur pertinence inclut en outre :

   - la détermination d'une pertinence minimum requise (S142) et
   - le maintien de blocs uniquement (S152) si leur pertinence est supérieure ou égale à ladite pertinence minimum requise.

16. Procédé selon la revendication 13 ou 14, dans lequel la sélection de blocs pertinents (S150) sur la base de leur pertinence comprend en outre :

   - pour chaque bloc, la détermination d'une profondeur structurelle dans ledit arbre syntaxique, ladite profondeur correspondant à, en termes dudit arbre syntaxique, la quantité de noeuds parents du bloc donné, préférablement du premier élément de contenu dans le bloc donné, qui représentent des instructions de balisage avec une dimension respective attribuée supérieure à une dimension minimum prédéterminée ;
   - pour chaque bloc, le calcul d'un facteur de profondeur sur la base de la différence entre la profondeur structurelle du bloc ayant la pertinence la plus grande et la profondeur structurelle du bloc donné, préférablement par une formule exprimable comme :

$$f_d(C) = (d_{ref} - d_c)^2$$

   où $f_d(C)$ dénote le facteur de profondeur pour le bloc c, $d_{ref}$ représente la profondeur du bloc ayant la pertinence la plus grande et de représente la profondeur du bloc c ;
   - pour chaque bloc, la détermination d'un indice structurel dans ledit arbre syntaxique, l'indice structurel d'un bloc donné correspondant à l'indice structurel du, en termes dudit arbre syntaxique, noeud parent le plus proche qui représente une instruction de balisage structurelle de niveau supérieur du bloc donné, préférablement du premier élément de contenu dans le bloc donné ;
   - pour chaque bloc, le calcul d'un facteur structurel sur la base de la différence entre l'indice structurel du bloc ayant la pertinence la plus grande et l'indice structurel du bloc donné, préférablement par une formule exprimable comme :

$$f_s(C) = (i_{ref} - i_c + 1)^2$$

   où $f_s(C)$ dénote le facteur structurel pour le bloc c, $i_{ref}$ représente l'indice structurel du bloc ayant la pertinence la plus grande et $i_c$ représente l'indice structurel du bloc c ;
   - la détermination d'une pertinence minimum requise (sol42) et
   - le maintien de blocs uniquement si leur pertinence satisfait à une opération relationnelle basée sur ladite pertinence minimum requise, sur leur facteur de profondeur et leur facteur structurel, préférablement selon une opération relationnelle exprimable comme:

$$m_c \geq m_{req} \cdot [f_s(C) \cdot f_d(C)]$$

   où $m_c$ dénote la pertinence pour le bloc c, $m_{req}$ dénote la pertinence minimum requise, $f_s(C)$ dénote le facteur structurel pour le bloc c et $f_d(C)$ dénote le facteur de profondeur pour le bloc c.

17. Procédé selon la revendication 12, 13, 14 ou 16, dans lequel ledit fichier de langage de balisage est un fichier HTML et ledit ensemble d'instructions de balisage structurelles de niveau supérieur comprend les balises HTML : « html », « table », « tbody », « div », « form ».

**18.** Procédé selon la revendication 15, 16 ou 17, dans lequel la détermination de ladite pertinence minimum requise (S142) comprend :

- le calcul d'un facteur de proportion de contenu sur la base de la taille totale de tous les éléments de contenu regroupés parmi tous les blocs et de la longueur totale ou de la taille totale du fichier de langage de balisage, ledit facteur de proportion de contenu étant préférablement exprimable comme :

$$\frac{\sum_{k=1}^{p}(L_k)}{L_{tot}}$$

où $L_k$ représente la taille totale de tous les éléments de contenu qui sont regroupés dans le bloc k, p représente la quantité totale de blocs et $L_{tot}$ représente la longueur totale ou la taille totale dudit fichier de langage de balisage ;
- le calcul d'une pertinence moyenne pondérée, préférablement par une formule exprimable comme :

$$\frac{\sum_{k=1}^{p}(m_k \cdot L_k)}{\sum_{k=1}^{p}(L_k)}$$

où $m_k$ dénote la pertinence pour le bloc k, $L_k$ représente la taille totale de tous les éléments de contenu qui sont regroupés dans le bloc k et p représente la quantité totale de blocs ;
- la détermination de la pertinence la plus grande parmi les pertinences de tous les blocs ;
- le calcul de ladite pertinence minimum requise sur la base de ladite pertinence la plus grande, de ladite pertinence moyenne pondérée et dudit facteur de proportion de contenu, préférablement par une formule exprimable comme :

$$\bullet\, m_{req} = \left[ m_{max} - \left( \frac{\sum_{k=1}^{p}(m_k \cdot L_k)}{\sum_{k=1}^{p}(L_k)} \right) \right] \cdot \frac{\sum_{k=1}^{p}(L_k)}{L_{tot}}$$

où $m_{req}$ dénote la pertinence minimum requise, $m_{max}$ dénote la pertinence la plus grande parmi la pertinence de tous les blocs, $m_k$ dénote la pertinence pour le bloc k, $L_k$ représente la taille totale de tous les éléments de contenu qui sont regroupés dans le bloc k, p représente la quantité totale de blocs et $L_{tot}$ représente la longueur totale ou la taille totale dudit fichier de langage de balisage.

**19.** Procédé selon l'une quelconque des revendications précédentes, dans lequel le calcul de ladite pertinence (S130) comprend :

• pour chaque bloc, la détermination d'une pertinence non ajustée comme étant le résultat de la pondération du résultat de ladite première fonction avec au moins le résultat de ladite deuxième fonction et/ou de ladite troisième fonction ;
• pour chaque bloc, la détermination d'un facteur de correction sur la base de la distance, en termes dudit espace de balisage, entre le bloc ayant la pertinence non ajustée la plus grande et le bloc donné, préférablement entre le premier élément de contenu dans le bloc ayant la pertinence non ajustée la plus grande et le premier élément de contenu dans le bloc donné, ledit facteur de correction utilisant préférablement une valeur non dimensionnelle obtenue en divisant la distance, en termes dudit espace de balisage, entre le bloc ayant la pertinence non ajustée la plus grande et le bloc donné par une étendue, ladite étendue étant préférablement égale à une distance entre l'un quelconque :

du premier élément de contenu dans le bloc ayant la pertinence non ajustée la plus grande; ou
- du premier élément de contenu dans le premier bloc apparaissant en termes dudit espace de balisage; et l'un quelconque
- de la coordonnée de la dernière instruction de balisage dans ledit fichier de langage de balisage en termes dudit espace de balisage; ou
- du premier élément de contenu du dernier bloc apparaissant en termes dudit espace de balisage; ou
- du dernier élément de contenu du dernier bloc apparaissant en termes dudit espace de balisage;

dans lequel ledit facteur de correction est préférablement exprimable comme :

$$c = 1 - \frac{|d|}{s}$$

où c dénote ledit facteur de correction, |d| dénote la valeur absolue de ladite distance, en termes dudit espace de balisage, entre le bloc ayant la pertinence non ajustée la plus grande et le bloc donné et s dénote ladite étendue ;
• la détermination de ladite pertinence en ajustant la pertinence non ajustée (S140) de chaque bloc au moyen du facteur de correction déterminé pour le bloc donné, préférablement en multipliant la pertinence non ajustée du bloc donné par le facteur de correction déterminé pour le bloc donné.

20. Procédé selon l'une quelconque des revendications précédentes, dans lequel la détermination d'une coordonnée dans un espace de balisage unidimensionnel sur la base de la (des) dimension(s) attribuée(s) à la (aux) instruction (s) de balisage balayée(s) avant l'élément de contenu donné comprend :

- pour chaque élément de contenu qui est précédé par un autre élément de contenu dans ledit fichier de langage de balisage, le calcul de la somme de la (des) dimension(s) attribuée(s) à la (aux) instruction(s) de balisage balayée(s) après l'élément de contenu précédent et avant l'élément de contenu donné et l'association de ladite somme comme une coordonnée relative exprimant une distance jusqu'à l'élément de contenu précédent avec l'article créé pour l'élément de contenu donné ; et
- pour le premier élément de contenu apparaissant dans ledit fichier de langage de balisage :

○ le calcul de la somme de la (des) dimension(s) attribuée(s) à la (aux) instruction(s) de balisage balayée (s) avant le premier élément de contenu et l'association (S114) de ladite somme comme une coordonnée exprimant une distance jusqu'au début dudit fichier avec l'article créé pour le premier élément de contenu ; ou
○ l'association d'une coordonnée prédéterminée à l'article créé pour le premier élément de contenu.

21. Procédé selon l'une quelconque des revendications précédentes, dans lequel ledit critère de groupage comprend au moins la condition, qui prend en compte la taille des groupes d'éléments de contenu, qu'un bloc séparé respectif n'est créé que pour chaque groupe d'éléments de contenu qui a une taille excédant une taille minimum prédéfinie de groupage.

22. Procédé selon l'une quelconque des revendications précédentes, dans lequel ladite taille d'un élément de contenu ou d'un groupe d'éléments de contenu est exprimable comme la quantité totale de caractères littéraux et de caractères représentés par des codes de caractère, tels que des références de caractère de balisage, dans l'élément de contenu donné ou le groupe donné, qui représentent des lettres dans un alphabet prédéterminé.

23. Produit de programme informatique comprenant un code de programme qui, lorsqu'il est chargé sur un ordinateur, est approprié à exécuter un procédé selon l'une quelconque des revendications précédentes.

24. Système informatique pour extraire un contenu pertinent d'un fichier de langage de balisage, en particulier d'un fichier HTML, ledit système comprenant un processeur ou un dispositif de calcul programmable programmer pour :

récupérer un fichier de langage de balisage (S100) d'un stockage ou serveur de données local ou distant, en particulier d'un serveur Web, ledit fichier contenant un contenu de données, tel qu'un texte en langage naturel, et des instructions de balisage, en particulier des balises HTML ;
prévoir une attribution (S112) qui attribue une dimension respective à des instructions de balisage du langage de balisage ;

créer une structure de données (S110) sur la base du fichier de langage de balisage récupéré, dans lequel la création de ladite structure de données comprend :

- le balayage du fichier de langage de balisage pour des instructions de balisage et pour des éléments de contenu dudit contenu de données, chaque élément de contenu ayant une taille ;
- la création d'un article séparé dans la structure de données au moins pour chaque élément de contenu;
- pour chaque élément de contenu, la détermination d'une coordonnée relative ou absolue dans un espace de balisage unidimensionnel sur la base de la (des) dimension(s) attribuée(s) à la (aux) instruction(s) de balisage balayée(s) avant l'élément de contenu donné, et l'association (S114) de la coordonnée relative ou absolue déterminée avec l'article créé pour l'élément de contenu donné ;

former un critère de regroupement pour regrouper des éléments de contenu, ledit critère de regroupement incluant au moins une condition prenant en compte une distance entre éléments de contenu adjacents en termes dudit espace de balisage unidimensionnel ;

définir des blocs de contenu (5122) en utilisant ladite structure de données, dans lequel la définition desdits blocs de contenu comprend :

- la création de groupes d'un ou plusieurs élément(s) de contenu sur la base dudit critère de regroupement ;
- la création d'un bloc séparé pour chaque groupe d'éléments de contenu qui satisfait à un critère de groupage ;
- l'association à chaque information de bloc se rapportant à (aux) élément(s) de contenu dans le bloc donné, ladite information incluant au moins la taille de chaque élément de contenu dans le bloc donné et la quantité d'éléments de contenu groupés dans le bloc donné;

calculer une pertinence (S130) pour chaque bloc, dans lequel le calcul de ladite pertinence comprend :

· la détermination du résultat d'une première fonction qui augmente avec une taille croissante du (des) élément(s) de contenu dans le bloc donné et diminue avec une quantité croissante d'éléments de contenu dans le bloc donné ; et
· la détermination d'au moins un :

- du résultat d'une deuxième fonction qui augmente avec une somme croissante de la $n^{\text{ème}}$ puissance de la taille de chaque élément de contenu dans le bloc donné et diminue avec une quantité croissante d'éléments de contenu dans le bloc donné; ou
- du résultat d'une troisième fonction qui diminue avec une distance croissante en termes dudit espace de balisage unidimensionnel entre les éléments de contenu dans le bloc donné;

· la pondération du résultat de ladite première fonction avec au moins un du résultat de ladite deuxième fonction et/ou de ladite troisième fonction ;

sélectionner des blocs pertinents (S150) sur la base de leur pertinence;
combiner les éléments de contenu (S154) des blocs pertinents en un contenu pertinent;
délivrer en sortie ledit contenu pertinent.

**25.** Système informatique selon la revendication 24 dans lequel ledit processeur ou ledit dispositif de calcul programmable est en outre programmé pour mettre en oeuvre le procédé selon l'une quelconque des revendications 2 à 22.

**26.** Système de surveillance de médias comprenant le système informatique selon la revendication 24 ou 25.

**27.** Système d'extraction d'informations comprenant le système informatique selon la revendication 24 ou 25.

**28.** Serveur Web comprenant le système informatique selon la revendication 24 ou 25.

**29.** Serveur de communication mobile comprenant le système informatique selon la revendication 24 ou 25.

**30.** Dispositif de communication mobile comprenant le système informatique selon la revendication 24 ou 25.

S100

server ⟹ retrieve HTML file

PHASE 1

S110

produce parse tree using parser

S112

HTML tag dimension allocation → label nodes with dimension

S114

PHASE 2

S120

determine HTML file properties & extract content elements

S122

define clusters

PHASE 3

S130

calculate cluster relevancy

PHASE 4

S140

adjust/correct relevancy

S142

calculate required minimum relevancy

PHASE 5

S150 — adj. relev. > req. min. relev.?

yes → combine cluster content into relevant content → output

S154

no

S152 — ignore cluster content

PHASE 6

FIG.1

http://efas.jrc.it/

FIG.2

EP 2 096 561 B1

```
<!DOCTYPE HTML PUBLIC "-//W3C//DTD HTML 4.0 Transitional//EN">
<!-- saved from url=(0019)http://efas.jrc.it/ -->
<HTML><HEAD><TITLE>European Flood Alert System - EFAS</TITLE>
<META http-equiv=Content-Type content="text/html; charset=iso-8859-1">
<META http-equiv=Pragma content=cache>
<META content=INDEX,FOLLOW name=ROBOTS>
<META http-equiv=Content-Language content=en>
<META content="European Flood Alert System - EFAS" name=description>
<META content="Flood, Forecast, Alert, Hazard, Risk, Mapping, Model, Lisflood,
JRC, CCR, WDNH, EFAS" name=keywords>
<META content="Katalin Bodis, JRC WDNH" name=author>
<META content="Joint Research Centre, Weather Driven Natural Hazards"
name=publisher>
<META content="Web site engine's code is Copyright © by Tobias Gierk. All
Rights Reserved. " name=copyright>
<META content=Advanced name=audience>
<META content=Homepage name=page-type>
href="European Flood Alert System - EFAS_files/main.css" type=text/css
rel=stylesheet>
<SCRIPT language=JavaScript>

<!--
function runClock() {
theTime = window.setTimeout("runClock()", 1000);
var today = new Date();
var display= today.toLocaleString();
status=display;
}
// -->

<!--
// Courtesy of SimplytheBest.net - http://simplythebest.net/scripts/
function makeArray(n) {
this.length = n
return this
}
monthNames = new makeArray(12)
monthNames[1] = "January"
monthNames[2] = "February"
monthNames[3] = "March"
monthNames[4] = "April"
monthNames[5] = "May"
monthNames[6] = "June"
monthNames[7] = "July"
monthNames[8] = "August"
monthNames[9] = "September"
monthNames[10] = "October"
monthNames[11] = "November"
monthNames[12] = "December"
function dateString(oneDate) {
var theMonth = monthNames[oneDate.getMonth() + 1]
var theYear = oneDate.getFullYear()
return theMonth + " " + oneDate.getDate() + ", " + theYear
}
//-->
</SCRIPT>
```

## FIG.3A

```
<META content="MSHTML 6.00.2900.3059" name=GENERATOR></HEAD>
<BODY class=light onload=runClock()>
<DIV id=container>
<DIV id=topLogo><IMG height=54 alt=Image
src="European Flood Alert System - EFAS_files/efas_head.gif" width=1012
border=0> </DIV>
<DIV id=topMenuBox1>   <A class=head
href="http://efas.jrc.it/index.html">Home</A>   |   <A
class=head href="http://efas.jrc.it/html/news.html">News</A>
  |   <A class=head
href="http://efas.jrc.it/html/feedback.html">Feedback</A>
  |   <A class=head
href="http://efas.jrc.it/index.html">Back</A>
        
        
        
        
        
        
        
        
        
           
        
        
     
<A class=head href="http://efas.jrc.it/html/contact.html">Contact</A>
  |   <A class=head
href="http://natural-hazards.jrc.it/">WDNH</A>   |   <A
class=head
href="http://ies.jrc.cec.eu.int/Land_Management.42.0.html">LMNH</A>
  |   <A class=head
href="http://ies.jrc.cec.eu.int/">IES</A>   |   <A
class=head href="http://www.jrc.cec.eu.int/">JRC</A> </DIV>
<DIV id=topMenuBox2>   
<SCRIPT>
        var mydate=new Date()
        var theYear=mydate.getFullYear()
        var day=mydate.getDay()
        var month=mydate.getMonth()
        var daym=mydate.getDate()
        if (daym<10)
        daym="0"+daym          var dayarray=new
Array("Sunday","Monday","Tuesday","Wednesday","Thursday","Friday","Saturday
")
        var montharray=new
Array("January","February","March","April","May","June","July","August","Septem
ber","October","November","December")
        document.write(dayarray[day]+", "+montharray[month]+" "+daym+",
"+theYear)
        </SCRIPT>
```

# FIG.3B

group 1
Σc = 39
Σl = 8

>         
>           &gt;&gt;
> Location:
>    <A class=legal href="http://efas.jrc.it/index.html">Home</A>

Content element 1

Content element 2

</DIV><BR>
<DIV
id=leftMenuBox><BR><BR><BR><BR><BR><BR><BR><BR><BR><BR><BR>
<BR><BR><BR><BR><BR><BR><BR><BR>
<SCRIPT language=JavaScript1.2
src="European Flood Alert System - EFAS_files/menuFunction.js">

</SCRIPT>

<SCRIPT language=JavaScript1.2
src="European Flood Alert System - EFAS_files/menuData.js"></SCRIPT>

group 2
Σc = 127
Σl = 107
cluster 1

<P></P></DIV>
<DIV id=contentBox>
<DIV id=contentBoxLine>
<P class=colour>The European Flood Alert System - a European Commission
initiative to increase preparedness for riverine floods across Europe
</P></DIV><BR><BR>
<P>

Content element 3

group 3
Σc = 12
Σl = 12

<H2 class=content>Introduction</H2>
<P></P>
<TABLE width="100%" valign="top">
  <TBODY>
  <TR>
    <TD vAlign=top>

Content element 4

Content element 5

Content element 7

Content element 6

group 4
Σc = 407
Σl = 283
cluster 2

      <P class=content align=justify>Following the disastrous floods in the Elbe
      and Danube river basins in August 2002, the <A class=bottom
      href="http://europa.eu.int/">European Commission</A> announced in the
      communication (COM(2002)-481) the development of a European Flood Alert
      System (EFAS). EFAS - developed within the <A class=bottom
      href="http://natural-hazards.jrc.it/">WDNH</A> project - will be capable
      of providing medium-range flood simulations across Europe with a lead-time
      between 3 to 10 days. </P>

group 5
Σc = 593
Σl = 447
cluster 3

      <P class=content align=justify>The benefit of EFAS is two-fold. First,
      EFAS should provide the European Commission with useful information for
      the preparation and management of aid during a flood crisis. Second,
      National Water Authorities should benefit from additional medium-range
      flood information that might contribute to increased preparedness in an
      upcoming flood event. EFAS is aimed at complementing national flood
      forecasting systems, not to replace them. The European Flood Alert System
      (EFAS) activity is at present in a development and testing phase at the <A
      class=bottom href="http://www.jrc.cec.eu.int/">European Commission Joint
      Research Centre</A>. </P>

Content element 8

Content element 9

Content element 10

Content element 11

FIG.3C

45

group 6
Σc = 384
ΣI = 276
cluster 4

&lt;P class=content align=justify&gt;Since the beginning of 2003 the European Commission DG Joint Research Centre (JRC) is developing a prototype of EFAS in close collaboration with relevant institutions in the Member States. The JRC benefits from experience gained already during the &lt;A class=bottom href="http://efas.jrc.it/downloads/EFFS_full_report.pdf"&gt;European Flood Forecasting System (EFFS)&lt;/A&gt; project (Reggiani et al, 2004) financed by DG Research.&lt;/P&gt;

group 7
Σc = 863
ΣI = 648
cluster 5

&lt;P class=content align=justify&gt;A prototype of EFAS for the Elbe and Danube catchments is expected to be ready and tested by 2006.&lt;/P&gt;

Content element 15

&lt;P class=content align=justify&gt; &lt;/P&gt;
&lt;P class=content align=justify&gt;The advantages of EFAS for the European Commission are

Content element 16

&lt;UL&gt;
&lt;LI type=disc&gt;

Content element 17

&lt;P class=content align=justify&gt;Overview of current flood situation in Europe for European Commission services&lt;/P&gt;
&lt;LI type=disc&gt;

Content element 18

&lt;P class=content align=justify&gt;Comparable results across Europe&lt;/P&gt;
&lt;LI type=disc&gt;
&lt;P class=content align=justify&gt;Fostering harmonised exchange of hydrological data and information in Europe&lt;/P&gt;&lt;/LI&gt;&lt;/UL&gt;
&lt;P class=content align=justify&gt;The advantages of EFAS for the National hydrological Institutes could be

Content element 20

Content element 19

&lt;UL&gt;
&lt;LI type=disc&gt;
&lt;P class=content align=justify&gt;Additional information on possible flood situations more than 3 days in advance based on different weather forecasts&lt;/P&gt;

Content element 21

&lt;LI type=disc&gt;
&lt;P class=content align=justify&gt;Interpretation of flood ensemble prediction system forecasts based on full sets of EPS &lt;/P&gt;

Content element 22

&lt;LI type=disc&gt;
&lt;P class=content align=justify&gt;Increased exchange on flood forecasting issues and EPS research between the different institutes participating in EFAS. &lt;/P&gt;&lt;/LI&gt;&lt;/UL&gt;
&lt;P class=content align=justify&gt;&lt;STRONG&gt;Contact person:&lt;/STRONG&gt;

Jutta

Content element 24

Content element 23

Thielen (&lt;A class=bottom href="mailto:jutta.thielen@jrc.it"&gt;jutta.thielen@jrc.it&lt;/A&gt;)&lt;/P&gt;&lt;/TD&gt;
&lt;TD width=10&gt;&lt;/TD&gt;
&lt;TD vAlign=top align=middle width=140&gt;

Content element 25

&lt;P class=content_right&gt;&lt;A class=bottom href="http://efas.jrc.it/downloads/EFASAlertsOverview2007.pps"&gt;Latest

EFAS

Alerts&lt;/A&gt;
&lt;P class=content_right&gt;&lt;/A&gt;&lt;IMG src="European Flood Alert System - EFAS_files/icon_alert.gif" useMap=#Map2
border=0&gt; &lt;BR&gt;&lt;BR&gt;&lt;BR&gt;
&lt;P class=content_right&gt;&lt;A class=bottom href="http://efas.jrc.it/bulletin/EFAS_bulletin_latest.pdf"&gt;Latest EFAS Bulletin&lt;/A&gt; &lt;BR&gt;&lt;BR&gt;&lt;BR&gt;
&lt;P class=content_right&gt;&lt;A class=bottom href="http://efas.jrc.it/workshop2007/index.html"&gt;Latest technical &lt;BR&gt;EFAS workshop&lt;/A&gt; &lt;BR&gt;&lt;BR&gt;&lt;BR&gt;

## FIG.3D

&lt;P class=content_right&gt;&lt;A class=bottom
href="http://efas.jrc.it/efas_mou/index.html"&gt;<u>River Basins Services</u>&lt;BR&gt;<u>in</u>
<u>collaboration</u>&lt;BR&gt;<u>with EFAS</u>&lt;BR&gt;&lt;BR&gt;&lt;/A&gt;&lt;IMG height=95
src="European Flood Alert System - EFAS_files/icon_mou.jpg" width=77
useMap=#Map3 border=0&gt; &lt;BR&gt;&lt;/P&gt;&lt;BR&gt;&lt;BR&gt;&lt;BR&gt;&lt;BR&gt;
&lt;P class=content_right&gt;&lt;IMG height=94
src="European Flood Alert System - EFAS_files/flood_budapest-
akademia.gif"

width=138&gt;&lt;/P&gt;&lt;/TD&gt;&lt;/TR&gt;&lt;/TBODY&gt;&lt;/TABLE&gt;&lt;/DIV&gt;&lt;BR&gt;&lt;BR&gt;&lt;BR&gt;&lt;BR&gt;
&lt;BR&gt;&lt;BR&gt;&lt;BR&gt;&lt;BR&gt;&lt;BR&gt;&lt;BR&gt;&lt;BR&gt;&lt;BR&gt;&lt;BR&gt;&lt;BR&gt;&lt;BR&gt;&lt;BR&gt;&lt;BR&gt;&lt;BR&gt;
&lt;BR&gt;&lt;BR&gt;
&lt;DIV id=leftMenuBox2&gt;

group 8
Σc = 123
Σl = 105
cluster 6

&lt;P class=colour_green&gt;<u>Regularly updated products</u> &lt;BR&gt;<u>derived from the EFAS</u>
<u>system</u>&lt;BR&gt;&lt;BR&gt;<u>Daily soil moisture forecast</u> &lt;BR&gt;<u>calculated with DWD</u>
<u>forecasting</u>
<u>data:</u>&lt;BR&gt;&lt;BR&gt;&lt;IMG height=96
src="European Flood Alert System - EFAS_files/icon_soilmoisture.jpg" width=176
useMap=#Map border=0&gt; &lt;MAP name=Map&gt;&lt;AREA shape=RECT
coords=0,0,87,95
  href="http://natural-hazards.jrc.it/activities_droughts_smtrend.html"&gt;&lt;AREA
  shape=RECT coords=89,1,176,97
  href="http://natural-hazards.jrc.it/activities_droughts_smanomfor.html"&gt;&lt;/MAP&gt;

group 9
Σc = 31
Σl = 16

&lt;P class=colour_green&gt;<u>Trend (7</u>
<u>days)&amp;nbsp;&amp;nbsp;&amp;nbsp;&amp;nbsp;&amp;nbsp;&amp;nbsp;&amp;nbsp;&amp;nbsp;Anomaly</u>&lt;/P&gt;
&lt;P class=colour_green&gt;&amp;nbsp;&lt;/P&gt;
&lt;P class=colour_green&gt;&amp;nbsp;&lt;/P&gt;
&lt;P&gt;&lt;IMG height=152
src="European Flood Alert System - EFAS_files/flood_germany_200.gif"
width=190&gt;&lt;/P&gt;&lt;/DIV&gt;
&lt;DIV id=cleaner&gt;&lt;/DIV&gt;
&lt;DIV id=bottomBox&gt;&lt;A class=legal
href="http://www.europa.eu.int/geninfo/legal_notices_en.htm"&gt;<u>Important legal</u>
<u>notice</u>&lt;/A&gt; <u>&amp;nbsp;&amp;nbsp;&amp;nbsp;&amp;nbsp;&amp;nbsp;&amp;nbsp;&amp;nbsp;&amp;nbsp;</u>
<u>&amp;nbsp;&amp;nbsp;&amp;nbsp;&amp;nbsp;&amp;nbsp;&amp;nbsp;&amp;nbsp;&amp;nbsp;</u>
<u>&amp;nbsp;&amp;nbsp;&amp;nbsp;&amp;nbsp;&amp;nbsp;&amp;nbsp;</u>
<u>&amp;nbsp;&amp;nbsp;&amp;nbsp;&amp;nbsp;&amp;nbsp;&amp;nbsp;&amp;nbsp;&amp;nbsp;</u>
<u>&amp;nbsp;&amp;nbsp;&amp;nbsp;&amp;nbsp;&amp;nbsp;&amp;nbsp;&amp;nbsp;&amp;nbsp;</u>
<u>&amp;nbsp;&amp;nbsp;&amp;nbsp;&amp;nbsp;&amp;nbsp;&amp;nbsp;</u>
<u>&amp;nbsp;&amp;nbsp;&amp;nbsp;&amp;nbsp;&amp;nbsp;&amp;nbsp;</u>
<u>&amp;nbsp;&amp;nbsp;&amp;nbsp;&amp;nbsp;&amp;nbsp;&amp;nbsp;&amp;nbsp;&amp;nbsp;</u>
<u>&amp;nbsp;&amp;nbsp;&amp;nbsp;&amp;nbsp;&amp;nbsp;&amp;nbsp;</u>
<u>&amp;nbsp;&amp;nbsp;&amp;nbsp;&amp;nbsp;&amp;nbsp;&amp;nbsp;</u>
<u>&amp;nbsp;&amp;nbsp;&amp;nbsp;&amp;nbsp;&amp;nbsp;&amp;nbsp;&amp;nbsp;&amp;nbsp;</u>
<u>&amp;nbsp;&amp;nbsp;&amp;nbsp;&amp;nbsp;&amp;nbsp;&amp;nbsp;</u>
<u>&amp;nbsp;&amp;nbsp;&amp;nbsp;&amp;nbsp;&amp;nbsp;&amp;nbsp;</u> &lt;A class=legal
href="http://efas.jrc.it/index.html"&gt;<u>Home</u>&lt;/A&gt; | &lt;A class=legal
href="http://efas.jrc.it/#top"&gt;<u>Top</u>&lt;/A&gt; | &lt;A class=legal

group 10
Σc = 35
Σl = 30

href="http://efas.jrc.it/index.html"&gt;<u>Back</u>&lt;/A&gt;
&lt;BR&gt;<u>© European Communities,</u>
<u>1995-2005</u> &lt;/DIV&gt;&lt;/DIV&gt;&lt;MAP name=Map2&gt;&lt;AREA shape=RECT
coords=2,1,177,88
href="http://efas.jrc.it/downloads/EFASAlertsOverview2007.pps"&gt;&lt;/MAP&gt;&lt;MAP
name=Map3&gt;&lt;AREA shape=RECT coords=2,1,77,95
  href="http://efas.jrc.it/efas_mou/index.html"&gt;&lt;/MAP&gt;&lt;/BODY&gt;&lt;/HTML&gt;

# FIG.3E

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 802491 A
- EP 1609285 B1
- EP 0774722 B1
- EP 861565 A

**Non-patent literature cited in the description**

- **Laender, A. H. ; Ribeiro-Neto, B. A. ; da Silva, A. S. ; Teixeira, J. S.** A brief survey of web data extraction tools. *ACM SIGMOD Rec.,* June 2002, vol. 31 (2), 84-93
- **Chia-Hui Chang ; Mohammed Kayed ; Moheb Ramzy Girgis ; Khaled F. Shaalan.** A Survey of Web Information Extraction Systems. *IEEE Transactions on Knowledge and Data Engineering,* October 2006, vol. 18 (10), 1411-1428
- **David Buttler ; Ling Liu ; Calton Pu.** Omini: A Fully Automated Object Extraction System for the World Wide Web. *Technical Report, Georgia Institute of Technology, College of Computing,* September 2000